(19)

**Europäisches Patentamt**

**European Patent Office**

**Office européen des brevets**

(11)  **EP 4 278 420 B1**

(12)  **EUROPEAN PATENT SPECIFICATION**

(45) Date of publication and mention
of the grant of the patent:
**04.12.2024   Bulletin 2024/49**

(21) Application number: **22700255.7**

(22) Date of filing: **13.01.2022**

(51) International Patent Classification (IPC):
**H02J 13/00** *(2006.01)*        **F24D 19/10** *(2006.01)*
**H02J 3/14** *(2006.01)*

(52) Cooperative Patent Classification (CPC):
**F24D 19/1063; H02J 3/144; H02J 13/00002;**
**H02J 13/00004;** F24D 2200/02; F24D 2200/08;
H02J 3/004; H02J 2203/20; H02J 2300/20;
H02J 2310/14

(86) International application number:
**PCT/IB2022/050231**

(87) International publication number:
**WO 2022/153199 (21.07.2022 Gazette 2022/29)**

(54) **ADAPTABLE CONSUMPTION HEATING OR COOLING SYSTEM**

ANPASSBARES VERBRAUCHSHEIZ- ODER KÜHLSYSTEM

SYSTÈME DE CHAUFFAGE OU DE REFROIDISSEMENT À CONSOMMATION ADAPTABLE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **14.01.2021   IT 202100000590**

(43) Date of publication of application:
**22.11.2023   Bulletin 2023/47**

(73) Proprietor: **ARISTON S.P.A.**
**60044 Fabriano (AN) (IT)**

(72) Inventors:
• **ROTILI, Rudy**
**60018 Montemarciano (IT)**

• **BOARO, Matteo**
**60128 Ancona (IT)**
• **MARRA, Lorenzo**
**60027 Osimo (IT)**
• **COACCI, Gianluca**
**60035 Jesi (IT)**

(74) Representative: **Premru, Rok**
**Mar.Bre S.R.L.,**
**2, Via San Filippo**
**60044 Fabriano (IT)**

(56) References cited:
**EP-A1- 3 382 297        EP-A1- 3 508 800**
**JP-A- 2008 267 708    US-A1- 2016 216 007**

**Description**

The object of the present invention is a method and apparatus consisting of a conditioning device of a fluid in a storage configured to condition the fluid to reach a predetermined temperature at a predetermined usage time, where:

- the term "conditioning" indifferently means "heating" or "cooling";
- said conditioning is by electrical energy;
- the electrical power is supplied by the grid in a limited quantity;
- optionally there is an energy system from renewable sources that supplies energy in variable quantities;
- the conditioning device is equipped with electronic logic means, some of which are also capable of allowing a preset temperature to be reached at a predefined time, having sufficient power available for the entire activation time;

and where it is to be avoided to increase the power drawn from the grid above a predetermined maximum power for more than a predetermined maximum time.

In particular, the present invention may belong to the class:

- of electric water heaters equipped with one or more storage tanks, suitable in particular for hygienic-sanitary uses, such as both traditional electric and heat pump water heaters;
- of air conditioning systems in which:

    - a fluid, which exchanges heat with an environment through a heat exchanger is conditioned in a buffer, in this case the storage is the buffer that determines the inertia of the system.
    - in the absence of a buffer:

        - the heat capacity of the storage is represented by the heat capacity of the vector fluid and the heat capacity of the emitters,
        - without loss of generality, nothing prevents from considering the overall heat capacity of the ambient to be conditioned, in this case the fluid to be conditioned is represented by the air in said ambient.

So, storage means in general what determines the thermal inertia of the system.

In users, in particular domestic users, the power that may be supplied by the grid is subject to a limit, set by the energy supply companies and determined by the distribution infrastructure and the availability of power in certain time periods; exceeding the maximum power for more than a predefined time leads to an energy disconnection; or in other cases it could trigger a rate with a higher energy cost.

Currently, in some countries including Italy, for energy supply contracts there is an energy disconnection for power usage thresholds in the order of 3, 4,5 or 6 kW, therefore it is not always possible to use two or more high-absorption household appliances such as oven, washing machine, dishwasher or water heater. The problem is particularly felt for storage water heaters which have an impact on users' comfort, and which may require a long activation time.

As mentioned, exceeding the consumption threshold given by the contractual power for a limited period is admissible since the disconnection of power supply does not occur instantaneously and, even if the case of exceeding of the contractual power involves a rate variation, the increase for a limited time does not significantly affect the costs.

To complete the picture, it must be considered that renewable energy now constitutes a non-negligible share of the domestic supply; this may come both from local generators also dedicated to single users and from large renewable energy systems connected to the distribution grids. In both cases it is advantageous to be able to change the power consumption profile to use renewable energy when it is available. The advantage generally translates into savings for the user and certainly in the greater ability to replace fossil energies with renewable ones. Therefore, we will also consider a system in which the supply of renewable energy increases the maximum usable power in a variable and not necessarily predictable way.

**PRIOR ART**

Water heaters, capable of preparing hot water at the temperature and quantity needed for predefined moments are known, these assume to be able to use all their nominal power, but in the case of being switched off to guarantee the power to a device having greater priority such as for example an oven, the availability of hot water could not be guaranteed.

Document WO0101542A1 describes another method in which an energy meter, when detecting that the maximum threshold has been exceeded, communicates the instant consumption level to all appliances; the appliances, in a substantially autonomous way, begin reducing their consumption starting from those with a lower priority until consumption falls below a threshold and the system returns to normal operation.

Document JP5853747B2 describes a control system for electrical heaters that prevents the activation of the heating function if this would cause an over consumption. The user has the possibility of bypassing the limitation.

Document EP2830184A1 makes the forecast of the energy requirement and of the available power provided from a renewable energy system and, based on the information on usage needs of different electric loads and of a statistical analysis, programs their activation.

Document US2016274556A1 reduces the activation percentage of the heating function of an air heating system up to a limit that does not affect the user comfort.

A drawback common to some of the methods described is that they need an external controller, to which the management of the consumption of any household appliance is entrusted, in order to guarantee the best solution to the o4ptimization problem; such controller should know the parameters and control algorithms of all the controlled devices. This requires the same communication protocol between all the devices and a central controller that is always in step with devices of the ever-increasing intelligence.

A drawback of other methods such as WO0101542A1, JP5853747B2 or US2016274556A1is that they do not do anything to prevent an over consumption. Only when the threshold is exceeded, they intervene in order to reduce the consumption with an interruption or reduction of already ongoing functions and therefore there is a sensitive impact on the user comfort

Methods aimed at preventing a plurality of electric water heaters from activating simultaneously causing a peak in consumption are described in the prior art. Three documents mentioned below belong to this area.

Document EP3508800A1 describes a method for staggering the activation of a plurality of water heaters in a large system with water heaters manageable by a same controller. In paragraph [0033] it is said that the water heater alternates heating periods (in staggered mode) with periods in which it restores the temperature. So EP3508800 (A1) teaches away from completing the conditioning just in time for the usage, thus increasing the standing heat losses.

EP3382297A1 proposes a random staggering criterium based on the serial number of every water heater. Here too, there is a teaching away from optimizating heat losses.

JP2008267708 uses heuristic techniques for staggering such as, for example, switching off the device that has been on for the longest time, or the one with a greater storage volume, if necessary.

US2026216007A1 teaches a method to reduce power consumption peaks, where an electrical network has an associated controller configured to send requests to reduce power consumption, a controller of a water heater is configured to respond to the request by switching off the heating function based on the heat reserve and heat requested.

Such methods, by staggering the activations of different water heaters over time, solve an optimization problem over a large quantity of loads and they work as long as correct criteria are established to access energy the shared scarce resource. However, these methods do not teach how to adapt to a consumption value variable over time such as the value of power available in a home when other household appliances are activated in an uncontrollable way. Furthermore, they teach that heating may be anticipated without constraints and do not address the problem of heat losses which are so greatly increased.

## OBJECTS AND SUMMARY

A general object of the present invention is to at least partially eliminate such drawbacks.

In particular, an object of the present invention is to prevent the over consumption by a forecast and planning that takes into account the comfort requirements.

A further object, at least of some variants of the invention, is to optimise this anticipated activation in order not to increase the energy consumption for standing heat losses.

Another object, at least of some variants of the invention, is to maximise the self-consumption of renewable energy; yet another object is to detect in advance the situation in which the available power does not allow to reach the set temperature within the usage time and possibly notify the need for more power.

Another purpose of at least some variants is to devise a method and a device that allow to avoid prolonged over-consumption, to forecast the available power and to optimize the self-consumption of renewable energy without the need for a power meter.

These and other objects, which shall become clear from the following description, are achieved with the invention in accordance with the provisions of claim 1.

Other objects may also be achieved by means of the additional features of the dependent claims.

Further objects and advantages of the present invention shall be better highlighted by the following description of a basic version of the method and apparatus for the optimization of the conditioning time.

According to the invention, the conditioning device estimates the activation time as a function of the target temperature and the usage time. On the basis of an available power provided for the conditioning. The conditioning device is able to vary its power and from activation it uses all the available power until reaching its nominal power, if there is an over consumption it reduces its power up to the level that does not cause an over consumption. Note that if the available power estimate is correct, the target temperature is reached at the usage time.

**List and explanation of Figures**

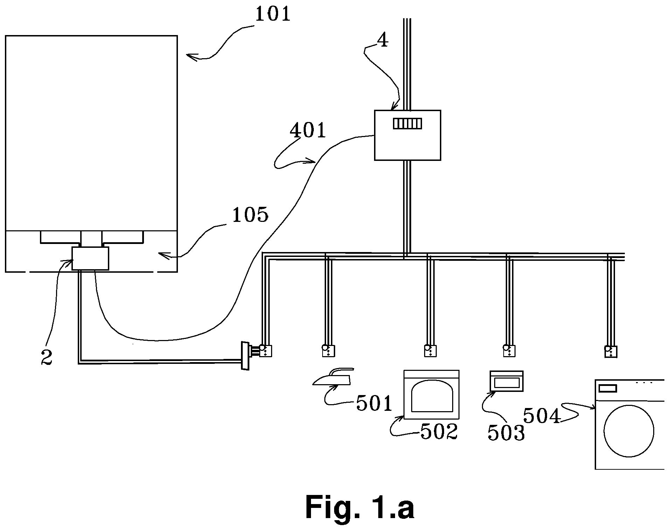

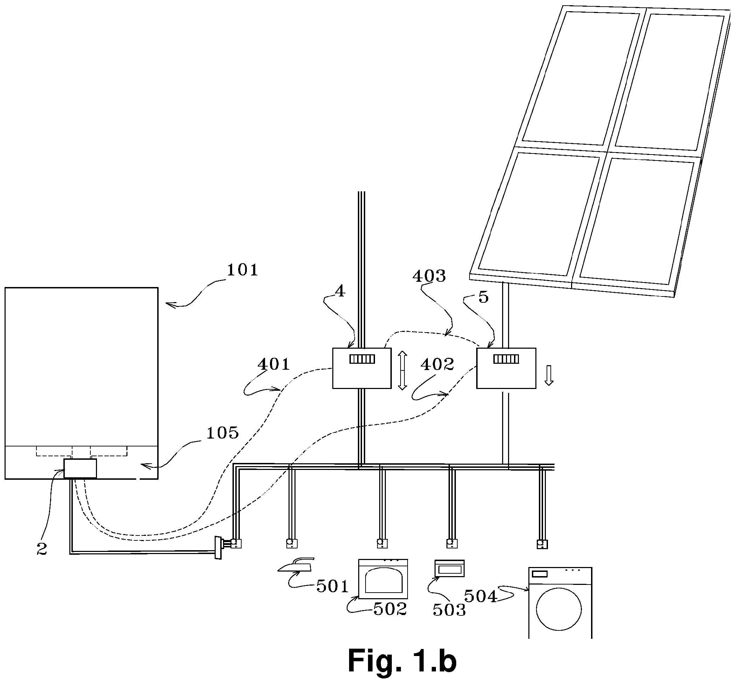

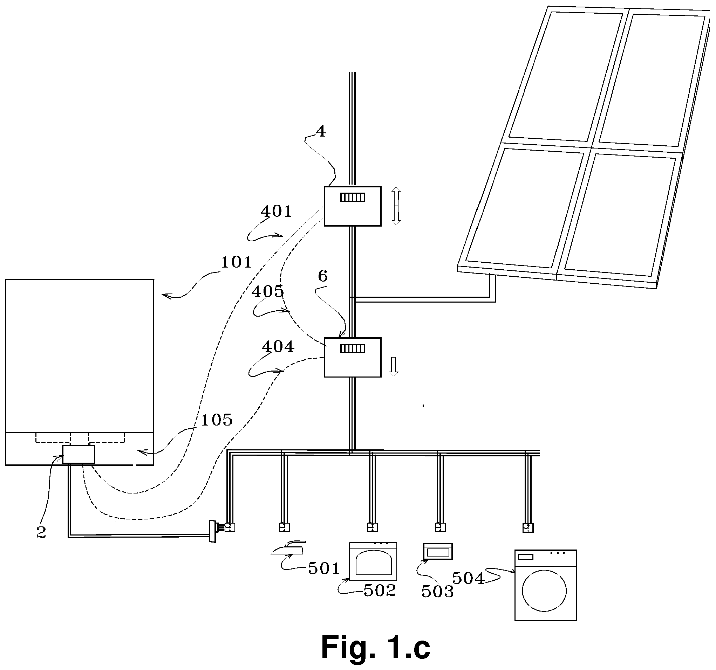

The figures are purely schematic but compatible with possible embodiments. As for figure 1.a, 1.b, 1.c, spatial terms such as "high", "low" refer, unless otherwise indicated, to the position of the object as shown in the figure.

Figure 1.a shows, by way of an example, a user facility consisting of several electrical loads powered exclusively by a conventional electrical source with detection means in the user input.
Figure 1. b shows a user facility as in figure 1.a but powered by both conventional and renewable sources equipped with means for detecting the conventional part and measuring means for the renewable part.
Figure 1.c shows a user facility as shown in figure 1.a but powered by both conventional and renewable sources equipped with means for detecting the conventional part and means for measuring the power used by the user.
Figure 2 shows a possible temporal trend of the power variables that will be used in the description of the invention.
Figure 3 shows a possible estimate of the temperature trend with respect to the time in the storage.
Figure 4 shows another possible estimate of the temperature in the storage with respect to time according to other variants of the invention.

**Description**

With reference to figures 1.a, 1.b, 1.c, the conditioning device 101 object of the invention provides at least one storage of a fluid to be conditioned at a target temperature T.target within a usage time t.target, through at least one element, adapted to condition, said element is powered by electrical energy.

Said fluid may be in particular water for hygienic-sanitary uses and as such it will always be indicated below, being it understood that the invention applies to any fluid, including air, which has characteristics suitable for being treated according to the methods and apparatuses of the invention.

The device 101 may also be an electric heat pump water heater and said element then consists of the condenser or evaporator of the heat pump. In other words, in the following description, said elements may be understood as any heating or cooling element fed directly or indirectly by electrical energy.

The device 101 comprises a control card 2 which is capable at least of:

- detecting the storage temperature "Ta" in a storage,
- saving in memory parameters such as target temperature "T.target" and usage time "t.target" and performing calculations on said parameters,
- modulating the conditioning power of said conditioning elements 103 by selecting an appropriate activation duty cycle within a control period or with the selection of the half-waves by switching at the zero voltage crossing.

According to the invention, the device 101 is further able to receive information from other devices such as:

- a control unit 4 placed on the power supply branch of the electrical grid (see figs 1.a, 1.b, 1.c), which may detect and report through the communication channel 401 the power delivered by the grid towards all user loads. If the user also has its own renewable energy generation system, such power is "negative" in the periods in which the renewable energy produced is in excess of the needs for self-consumption, that is, power is fed into the grid rather than absorbed from it;
- if a local renewable source is available:

  - a renewable power control unit Pv 5 placed on the power supply branch from the renewable source (see fig. 1.b) which may directly detect and report the power sent to users for self-consumption through channel 402 or channels 403-401;
  - or a used power control unit Pu 6 placed on the user power supply branch from the grid, downstream of the connection with any renewable source power generator, said used power control unit Pu 6 may directly detect and report via channel 404 or channels 405-401 the power currently used by the user and therefore, indirectly, by difference with respect to the power detected by the control unit 4, the power drawn from the renewable source.

It is clear that the conditioning process may comprise a thermostating step in which the temperature control takes place as per the prior art with a hysteresis.

By way of an example and without any limiting intent, in the case of electric resistance the heating power may be varied with pulse width modulation, or in the case of a heat pump with a variable speed compressor.

The device 101 is part of a set of electrical loads "501" - "504" (hereinafter referred to as user) see figures 1.a, 1.b, 1.c with which it shares the electric power.

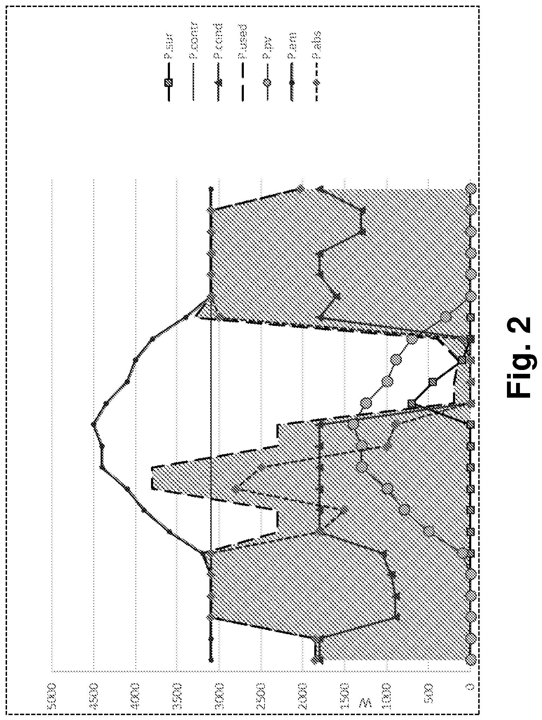

With reference to fig. 2 the following terms are used to indicate the power variables used below:

"P.contr" contractual power is the maximum power, predetermined or contractual, that may be supplied by the grid as per the supply contract;

"P.pv" is the power from renewable source;

"P.em" = P.contr + P.pv is the total deliverable power, sum of the contractual power P.contr and of the power from renewable source P.pv;

"P.abs" absorbed power is the power delivered by the grid, absorbed by the user net of any power from renewable source P.pv, which may be detectable by the control unit 4;

"P.sur" surplus power is the net power fed back into the grid, it is essentially the opposite in value of the power absorbed P.abs from the grid and as such it may be detectable by the control unit 4;

"P.used" = P.abs + P.pv is the overall used power, absorbed by the user electric loads which in the absence of power from renewable source corresponds to the absorbed power P.abs, in the presence of power from a renewable source it may be detected by a meter placed at the used power control unit Pu 6.

It may be seen that the absorbed power P.abs is equal to the used power minus the power from renewable source P.pv:

$$P.abs = P.used - P.pv$$

from which

$$P.used = P.abs + P.pv$$

With reference to figure 2, it may be seen that if power from renewable source P.pv is available, it is possible that the used power P.used exceeds the contractual power P.contr without causing over consumption. When the power from renewable source P.pv is greater than the used power P.used, there is a surplus power P.sur fed into the grid

$$P.sur = P.pv - P.used = - (P.used - P.pv)$$

so:

$$P.sur = - P.abs$$

A negative absorbed power P.abs is in practice a surplus power P.sur. In the following, reference shall be made to the absorbed power P.abs and the surplus power P.sur as positive quantities, therefore either to the absorbed power P.abs or to the surplus power P.sur but not both simultaneously.

In general, there is an over consumption if the absorbed power P.abs exceeds the contractual power P.contr

$$P.abs > P.contr$$

or equivalently if

$$P.used > P.em$$

The available power "P.av" is defined as the difference between the deliverable power P.em and the used power P.used or equivalently as the difference between the contractual power P.contr and the absorbed power P.abs:

$$P.av = P.em - P.used$$

Since

P.em - P.used = (P.contr + P.pv) - (P.abs + P.pv) = P.contr - P.abs The following is valid

$$P.av = P.contr - P.abs$$

It will be seen how, according to the methods of the invention, it is possible to avoid causing an over consumption for more than a limited time interval $\Delta t.max$ while continuing to meet the user setting of reaching the target temperature T.target within the usage time t.target.

Additional values defined are:

- "P.cond" as the conditioning power used by said device 101 for the conditioning;
- "P.nom" as the nominal power or rated power which is the maximum power that may be absorbed by the device 101, possibly depending on the working conditions as in the case of a heat pump;
- with "T.target" and "t.target" respectively the target temperature and usage time;
- with "t.cond" the conditioning time;
- the index "j" indicates a generic storage j and "P.nom.j", "P.cond.j", "T.target.j" and "t.target.j" respectively nominal power, conditioning power, set temperature and usage time for a generic storage j. The "j" index shall be used in those variants that provide for multiple storages between which it is necessary to distinguish.
- the index i is used to indicate a generic time interval;
- the index k to indicate a generic temperature segment and m to indicate the number of temperature segments;
- the index h for a generic conditioning element.

The method of the invention in its general principle and according to one or more of its possible embodiments.

One advantage of the inventive solution is the applicability to different installation conditions which may include the availability of power from renewable source and any combination of control units for measuring the absorbed power P.abs or the overall used power P.used or the power from renewable source P.pv. The minimum requirement, at least for some embodiments, is that there is at least one control unit 4 capable of detecting the over consumption condition.

Meters (or detectors) called "smart meters", capable of communicating through known means, to other devices 101, 501 - 504 of the user facility, for example information and sometimes, at least for some models, of receiving information and/or commands have long been known.

Therefore, the invention presupposes the presence of a control unit 4 which may be the electrical energy meter of the user, or a modified meter with added modules or an ad-hoc device. In any case, said control unit 4 uses the communication channel 401 and is able to detect and communicate, according to the variants:

- at least the condition in which the used power P.used exceeds the deliverable power P.em;
- preferably at least the absorbed power P.abs in excess of the contractual power P.contr;
- preferably the absorbed power P.abs (power supplied by the grid);
- even more preferably the available power P.av;
- and even more preferably, when power from a renewable source P.pv is present, the surplus power P.sur is fed back into the grid.

In the event that the user is provided with a renewable energy system, there may be additional control units in addition to said control unit 4, such as for example with reference to fig. 1.b a renewable power control unit Pv 5 placed on the branch of the renewable energy system and suitable for measuring power from renewable sources, or with reference to fig. 1.c a used power control unit Pu 6 located downstream of any renewable energy system and adapted to measure the power used by the user P.used. If present, such renewable power control unit Pv 5 is preferably able to send signals to other devices through channels 402 or 403, as in fig. 1.b, and such used power control unit Pu 6 through, for example, channels 404 or 405.

**How to detect an over consumption**

It will be seen how, according to the invention it is always possible to achieve the intended purposes even with different versions of said control unit 4 responding to the minimum characteristics indicated above or even with alternative means to a control unit 4.

A meter or control unit for the energy used and a meter of the energy produced from renewable sources, even with communication capabilities, are part of the prior art, but are part of the invention:

- the way in which said meters, even legacy meters, are used as control units to achieve the objects of the invention;
- the solutions described to reach said objects even with simpler version of said control units;
- and, for some variants, the preferred characteristics of said control unit 4, renewable power control unit Pv 5 and used power control unit Pu 6 are comparable to smart meters with communication channels.

Said communication channels 401, and/or 402, 403, 404, 405 use known means and are represented in the figures 1.a, 1.b, 1.c as connections between two points, but without loss of generality they may be direct or wireless indirect transmissions or in broadcast mode, between the same points.

The over consumption detection may be made directly with a measurement by said control unit 4, that in the simplest case is limited to detect an over consumption with known electronic means and may not have the capacity of communicating externally any other value other than the over consumption condition.

As an alternative, said detection may be made with a calculation by any one among said control unit 4, said control card 2 or said used power control unit Pu 6 or renewable power control unit Pv 5 if present. To this end, it is sufficient to know the absorbed power P.abs and the contractual power P.contr and verify if

$$P.abs > P.contr$$

In the case that the over consumption is detected by a calculation, a non-negative tolerance P.toll may preferably be defined, and the over consumption may be detected when

$$P.abs + P.toll > P.contr$$

Not only the calculation, but also the detections may be made with means equivalent to the control unit 4. For example, with the said control unit, if a renewable energy source is not present; in this case the absorbed power P.abs is equal to the used power P.used, measured by the used power control unit Pu 6 that may communicate it to one among said control unit 4, said control card 2 that may make the calculation.

If a renewable source is present, the used power control unit Pu 6 measures the power used P. used, while the absorbed power P.abs is measured by the control unit 4. By comparing the two values, it is advantageously possible to determine the power from renewable source P.pv with the formula:

$$P.pv = P.used - P.abs$$

Knowing the power from renewable source P.pv may enable additional functions described below.

If there is a renewable power control unit Pv 5 with a communication channel 402 or 403 , then the power from renewable source P.pv is also known. If both a used power control unit Pu 6 and a renewable power control unit Pv 5 are present, the over consumption detection may be made even without having readings from a control unit 4 (for example in the case of a control unit 4 consisting of an old model meter, not of the smart meter type). In this case there is an over consumption if the used power P.used detected by said used power control unit Pu 6 is greater than the deliverable power P.em:

$$P.used > P.em = P.contr + P.pv$$

Or

$$P.used + P.toll > P.em = P.contr + P.pv$$

where the contractual power should be known to at least one among the control card 2, said control unit 4, said control unit 4, said renewable power control unit Pv 5, said used power control unit Pu 6 and the calculation may be made completely from one or distributed on more of said devices 2, 4, 5 or 6.

In general, therefore, the control unit 4, or if present, the renewable power control unit Pv 5 or the used power control unit Pu 6 are provided at least with detection or communication means such as to enable the control card 2 to detect (either because received or because calculated by it) at least over consumption conditions. To this end, the devices control unit 4, renewable power control unit Pv 5 or used power control unit Pu 6 may have even only essential measurement and communication functions because the control capacity may be in the control card 2.

Therefore, the over consumption condition may be expressed with:

$$P.used + P.toll > P.em \text{ with } P.toll \geq 0$$

or equivalently:

$$P.abs + P.toll > P.contr$$

Where the first expression corresponds to a possible calculation in the case in which the used power P.used is known (because the power from renewable source P.pv is either known or null); the second expression corresponds to a possible calculation in the case in which the absorbed power P.abs is known (the power from renewable source P.pv may be unknown). The conditions are however equivalent.

In the particular case in which said tolerance P.toll is equal to zero, the over consumption may be detected directly also with the control unit 4, with known methods, without the need for said control unit 4 to detect or know any power value. Without loss of generality, with respect to the way in which an over consumption is detected, the first of the two expressions will be used in the following to indicate the condition of over consumption. Therefore, where we say "used power P.used plus said tolerance P.toll does not exceed said deliverable power P.em" it does not imply the knowledge of any power value, while other optional functions described below need some power values to be known as it is explained below.

**Management of over consumption cases**

Following the description of consumption detection methods according to different embodiments , the method with which the control card 2 may revert back from an over consumption condition continuing to guarantee reaching said target temperature T.target within the usage time t.target will be described.

According to the invention, the control card 2 determines the activation time t.ON that allows said target temperature T.target to be reached within the usage time t.target with values of said conditioning power P.cond lower than said nominal power P.nom and preferably equal to a forecast power P.f. Possible embodiments for estimating said forecast power P.f. are described below. At the activation time t.ON a conditioning step begins, this lasts for a conditioning time t.cond, and ends when a conditioning end temperature T.end.cond equal to the set temperature T.target is reached, and during said conditioning step the following controls are periodically made:

- detecting and communicating to said control card 2 at least if an over consumption takes place using any of the described methods and in a positive case:
- detecting the over consumption time "t.sovr" at which this occurs;
- from said over consumption time t.sovr, within a limited time interval $\Delta t.max$, defined in the memory of said control card 2 and until said conditioning time P.cond is greater than zero, reducing said conditioning power P.cond until said used power no longer exceeds said deliverable power P.em;

- if instead said used power does not exceed said deliverable power P.em and if said conditioning power P.cond is lower than said nominal power P.nom the control card 2 may advantageously increase said conditioning power;
- if said temperature T.end.cond is reached, it ends said conditioning step.

To estimate the conditioning time t.cond, the control card 2 may use a preset table in which a conditioning time corresponds to each target temperature T.target, or preferably to each temperature range from a current value to a target temperature T.target; or it can use a linear function with a preset coefficient in said control card 2 that takes into account the heat capacity and a conditioning power P.cond, lower than the nominal power P.nom by a quantity that may be set by the person skilled in the art, and higher as the greater the risk of over consumption and possibly modifiable or set with learning algorithms as described below for some embodiments. Alternatively said preset linearity coefficient may consist only in the thermal capacity while the actual conditioning power may be estimated in the operation step with known methods.

**Power control - Case in which the available power is known**

The methods that may be used to revert from over consumption will now be described based on the characteristics of said control unit 4.

Note that the available power P.av is the residual power that can be used to increase the conditioning power P.cond. According to a preferred embodiment, the control card 2 knows the value of the available power P.av and, during conditioning, if at a generic instant of time it detects that the available power P.av is negative, then it recognizes an over consumption and, before said limited time $\Delta$t.max has elapsed from the over consumption time t.sovr, it reduces the overall conditioning power P.cond for said device 101 by a quantity equal to at least the absolute value |P.av|.

In formulas, if P.av <0, we set:

$$\text{new P.cond} \leq \text{previous P.cond} + \Delta \text{P.cond}$$

Where $\Delta$P.cond = - | P.av | = P.av,
in order to restore the available power P.av to a non-negative value.

Note that, it being understood that it must be P.cond $\leq$ P.nom, this formula actually has a general value in the sense that, regardless of whether P.av is positive or negative, its application:

- if P.av <0 , reduces P.cond;
- if instead P.av > 0, P.cond increases (according to a possible embodiment described below);
- if instead P.av = 0, P.cond is not changed by the algorithm.

The result is that the device 101, according to a preferred embodiment, may use all the available power at each moment in time, including renewable energy sources,-.

The goal of avoiding prolonged over consumption is achieved even if it is imposed that P.av is not only greater than zero, but greater than a minimum tolerance value. So, in general to avoid a prolonged over consumption,

$$\text{if P.av} < \text{P.toll}$$

P.cond is reduced by an amount equal to at least said available power P.av minus said tolerance and in any case at most equal to the current value of said conditioning power P.cond, which is the reduction obtainable with a complete shutdown; in formulas:

$$\Delta \text{P.cond} <= \text{P.av} - \text{P.toll}$$

where a negative $\Delta$P.cond variation indicates a reduction and the maximum reduction is equal to P.cond, which goes back to the previous situation in the particular case in which said tolerance is equal to 0.

In the event that the over consumption exceeds the conditioning power P.cond, the control card 2 suspends the conditioning function. Therefore, the system thus described will not cause an over consumption for more than a limited time $\Delta$t.max.

According to a possible embodiment, if the control card 2 knows the available power P.av, when it detects the need to activate its own element, it sets the relative conditioning power P.cond to the minimum value between nominal power P.nom and available power P.av minus any tolerance value P.toll. Upon activation, we have:

$$\text{P.cond} = \text{minimum (P.av} - \text{P.toll, P.nom)}$$

**Power increase when power is available**

Advantageously, if it detects that the available power P.av is greater than said tolerance value P.toll, the control card 2 may increase the conditioning power P.cond by an equal amount until reaching the nominal power P.nom. In other words, the control card 2 adjusts the power P.cond to the maximum value such that the available power P.av, minus any tolerance value P.toll, is not negative; this is accomplished by imposing a variation $\Delta$P.cond in the conditioning power as follows:

$$\Delta P.cond = P.av - P.toll$$

and where the maximum reduction is equal to the conditioning power P.cond and the maximum increase is equal to the difference between the conditioning nominal power P.nom and the conditioning power P.cond and where the tolerance P.toll is greater or equal to zero.

As mentioned, the second formulation has a more general validity and is equal to the first when said tolerance P.toll is set equal to zero.

Therefore, the conditioning power P.cond is always kept at the maximum value that allows the available power P.av to be not less than zero and possibly not less than a predefined tolerance value P.toll.

Note that, while an increase in conditioning power P.cond is preferably made as soon as available power is detected, a reduction may be made with a certain delay within the limited time Δt.max from the beginning of the over consumption.

The system described remains valid even if there are more conditioning elements controlled by the same control card 2, in this case the conditioning power can be assigned among the various heating elements according to predefined priorities with methods known to the person skilled in the art.

**Temperature increase to promote self-consumption**

In case a renewable source is present, advantageously, according to the invention, it is useful to maximise the self-consumption by storing heat energy at least for that part for which thermodynamically more efficient uses are not available.

This is almost always possible if the conditioning whose management is the object of the invention consists of a water conditioning process in one or more storages. In fact, the target temperature T.target is the minimum necessary to ensure the service, but it may be increased, for example, to store more heat energy from a renewable source up to the maximum values allowed by safety standards and provided that this does not lead to unnecessary heat losses.

But even if the air conditioning concerns a room, the target temperature T.target may be changed, increasing it in case of heating or reducing it for cooling, without considerably affecting comfort.

As said, the control card 2 may detect in any of the described ways or with equivalent methods if the surplus P.sur is positive, possibly for a predefined tolerance threshold in said control card 2. As long as it detects that said power surplus P.sur is positive, the control card 2 adds the following controls to the thermostating operation:

- The control card 2 sets T.end.cond equal to a predefined maximum temperature T.lim in said control card 2, (greater than the target temperature T.target in case of heating and lower in case of cooling);
- if the target temperature T.target is reached or if there is not an active conditioning step, it continues or starts conditioning up to the maximum temperature T.lim by adjusting the power P.cond such that the power surplus is not negative; this may be achieved by imposing a variation ΔP.cond in the conditioning power:

$$\Delta P.cond = minimum\ (P.sur,\ P.nom - P.cond).$$

- alternatively, P.cond is varied with one of the methods already described to keep the available power P.av at a value close to zero but not negative, however, by using the surplus power P.sur instead of the available power P.av as a quantity to be maintained not negative;
- if the temperature T.end.cond is reached, the conditioning step ends.

If necessary, it is possible to define a maximum time within which the start of conditioning may be anticipated by activating the self-consumption; with this method it is possible to avoid a thermodynamically less efficient use: when conditioning is switched on for self-consumption in advance P.cond is set equal to said surplus power P.sur, and the start of conditioning is periodically recalculated until the moment of start of conditioning arrives, then the conditioning power is set equal to P.nom, and the conditioning step begins.

**Power check if the available power is not known**

The same purpose of regulating the conditioning power P.cond to revert from an over consumption condition, may be obtained even if the available power in general is not known, but alternative signals are available sent by an over consumption detector 4 whose control logic is described below.

**Case in which only the value of excess used power is known**

There is a first alternative signal if the control unit 4 detects only the over consumption condition and the entity of the over consumption, but not the available power P.av in general. In the event of over consumption, the control card 2 therefore behaves as in the previous case. If there is no over consumption and the conditioning power P.cond is lower than the nominal value, the control card 2 does not know if and how much said conditioning power P.cond may increase, but it may advantageously carry out progressive power increases until it occurs that

$$P.cond = P.nom$$

or it receives an over consumption signal.

In order to avoid oscillations among power, reductions and increases, advantageously the control card 2, when carries out a reduction subsequent to an over consumption, it also initialises a stabilisation meter t.stab with a time interval within which no power increases may be made. Such time value and the extent of power increase may be set by the man skilled in the art.

**Case in which it is known only if the used power exceeds the maximum power**

In the most basic embodiment in which the control unit 4 detects only the over consumption condition, but not the extent of the over consumption nor the available power, according to the invention the control card 2 may proceed by successive decreases until the over consumption condition is exited.

More specifically, upon receiving a first over consumption signal, the control card 2 begins to decrease the conditioning power P.cond, up to the first of the two events: a predefined time has elapsed without receiving over consumption signals or the conditioning system P.cond is cleared.

As in the previous case, in the absence of an over consumption signal, the control card 2 may increase the conditioning power P.cond until it reaches the nominal power P.nom, but unlike the previous case, the control card 2 does not know neither the entity of the available power P.av nor that of the over consumption and therefore always proceeds by trial and error; therefore, a further expedient is needed to avoid instability between increases and decreases. A possible solution is that the control card 2 recognises the decrease which has eliminated the over consumption and maintains that level of conditioning power for a period of time. To achieve this purpose, according to the invention, the control card 2 has in memory a stabilisation meter t.stab and a status variable; when it receives a first over consumption signal, if the conditioning function is active, it decreases the conditioning power P.cond and initialises the status variable with the value over_P; at each subsequent over consumption signal, the control card 2 performs a further decrease, when a sampling interval elapses without receiving the over consumption signal, the control card 2 switches the status variable into a value below the threshold below_P and initialises the stabilisation meter t.stab which has the same role already described. An equivalent solution to avoid instability is that the control card 2 recognises the increase that led to the over consumption, cancels said increase and maintains said power level for a period of time.

With the alternative means described by way of an example, it has been seen how it is possible to optimise the power so as not to cause the deliverable power P.em to be exceeded even for different types of simpler or more advanced over consumption detector 4.

**Conditioning time estimate**

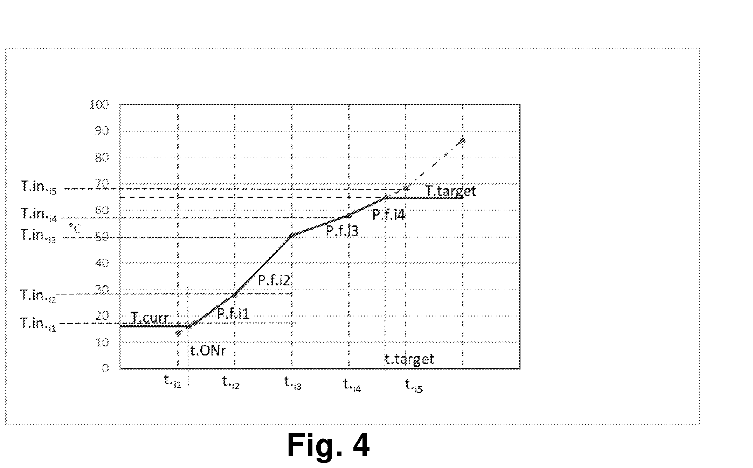

The control card 2 may estimate the time required for conditioning in a storage tank on the basis of the nominal power, heat capacity, efficiency and target temperature T.target. The case in which the thermal capacity Cap.ter is preset in the memory of said control card 2 and then the case in which it is learned during operation are described below. For the purposes of the invention, the time over temperature curve may be approximate to a linear curve, see Figure 4. The time curve of the temperature is solved to obtain the time:

$$T.target - T.curr = P.eff * t.cond / Cap.ter$$

Where P.eff is the useful power for conditioning and is equal to the electrical power dissipated for an efficiency coefficient eff

$$P.eff = P.cond * eff$$

in the case of conditioning resistance, the efficiency coefficient eff is substantially equal to one, in the case of a heat pump the efficiency coefficient eff is equal to the COP (Coefficient of Performance). Cap.ter is the heat capacity of the storage in which the power is dissipated. For the estimation of the conditioning time, a forecast power P.f is considered, which may be set equal to the nominal power P.nom times a reduction coefficient K lower than 1.

$$P.f = P.nom * K$$

The parameter K, representing the fraction of nominal power P.nom that is forecasted to be available, may be set by the person skilled in the art, and may be constant or variable during conditioning or set with learning algorithms as described below for some embodiments; in essence, it is sufficient that it is foreseen not to be possible to use all the nominal power and consequently the start of conditioning is anticipated.
So, in general, by combining the formulas and solving for the time we have:

$$t.cond = (T.target - T.curr) * (Cap.ter/eff) / P.f$$

where t.cond is the conditioning time, T.curr is the temperature detected at the time of the estimate. The conditioning time t.cond is directly proportional to the temperature variation and to the thermal capacity Cap.ter and inversely proportional to the heating efficiency eff and to the forecast power P.f. The thermal capacity Cap.ter and the efficiency eff are two system parameters that may be represented by a single parameter which will now be called linearity coefficient Coeff.lin and corresponds to the heat capacity over efficiency ratio.

$$Coeff.lin = Cap.ter/eff$$

Said linearity coefficient Coeff.lin may be preset in the memory of the control card 2; the value may be characterised in laboratory with known means the conditioning time t.cond is directly proportional to the linearity coefficient Coeff.lin.
For greater precision, it is possible to use a linear curve for m segments of storage temperature Ta; the extremes of each segment are preset in said control card 2 and each segment k corresponds to a linearity coefficient Coeff.lin.k; the conditioning time in a segment k of said storage temperature Ta is given by:

$$t.cond.k = (T.k+1 - T.k) * Coeff.lin.k / P.f$$

where T.k is the initial extreme of said segment k and T.k + 1 is the initial extreme of the next and adjacent segment k + 1. In the particular case in which there is a single segment or the current temperature T.curr and the set temperature belong to the same segment, the conditioning time is given by:

$$t.cond = (T.target - T.curr) * Coeff.lin / P.f$$

Otherwise, the conditioning time is the sum of sub-time intervals, corresponding to consecutive segments k of storage temperature Ta with k = k.in + 1 ... k.end, in which the first and last time intervals are respectively:

$$t.cond.k.in = (T.k.in+1 - T.curr) * Coeff.lin.k.in / P.f$$

$$t.cond.k.end = (T.target - T.k.end) * Coeff.lin.k.end / P.f$$

and where the indices k.in + 1 and k.end are such that T.k.in + 1 is the final extreme of segment k.in of the beginning of conditioning that includes the current temperature T.curr and T.k.end is the initial extreme of the k.end segment at the end of conditioning which includes the target temperature T.target and any intermediate intervals are:

$$t.cond.k = (T.k+1 - T.k) * Coeff.lin.k / P.f$$

with k = k.in+1, .. k.$_{end}$

If the thermal range from the current temperature T.curr to the target temperature T.target embraces several temperatures segments, there are corresponding different linearity coefficients. It is possible to approximate this with a single linear segment, an adequate result is obtained with a linearity coefficient equal to the average of the coefficients of each segment, even better if it is equal to the weighted average with the percentage overlap of each segment k on said actual heat excursion from an initial temperature T.in to a final temperature T.end.

In the case of a single segment, the formula is simplified by the calculation:

$$t.cond = (T.target - T.curr) * Coeff.lin / P.f$$

**Estimated time specific case with heat pump conditioning**

Even in the case of a heat pump for the purposes of the invention, the linear formula described is an acceptable approximation; alternatively, it is also possible to further improve the time estimate, and take into account that the COP, and therefore the linearity coefficient Coeff.lin, is affected by the difference between the evaporator temperature Te and condenser temperature and therefore varies during conditioning.

Note that in general the person skilled in the art knows how to obtain the current COP through tables, experimental curves or formulas, the temperatures at the evaporator Te and at the condenser and the speed of the compressor being known $\omega$. If the temperatures of the evaporator Te or of the condenser Tc are not known, for the purposes of the invention:

- in the case of the heating process, the storage temperature Ta (heat sink) may approximate the temperature of the condenser Tc and the temperature of the heat source well may approximate the temperature of the evaporator (Te);
- vice versa, in the case of the cooling process, the storage temperature Ta (cold sink) may approximate the temperature of the evaporator Te and the temperature of the cold source may approximate the temperature of the condenser (Tc).

However, calculating the conditioning time taking into account that the COP varies during the conditioning is an integral mathematical problem, complex to carry out in a microcontroller. An advantageous method is indicated below for updating the COP as the storage temperature Ta varies by selecting suitable values of the linearity coefficients Coeff.lin.k on segments of the storage temperature Ta defined on the basis of the temperature value of the external source. Note that the linearity coefficient Coeff.lin.k dimensionally corresponds to the ratio of heat capacity to efficiency, this parameter also describes the effect of standing heat losses. Therefore, it is correct to use different linearity coefficient values Coeff.lin.k as the storage temperature Ta varies as well as its difference to the external source temperature.

By way of an example, the description refers to the case in which the storage is to be heated and exchanges heat with the condenser while the external source (evaporator at temperature Te) is the heat source. The same considerations apply if the storage temperature Ta is to be cooled exchanges heat with the evaporator and the external source (condenser at temperature Tc) is the one that absorbs heat.

It is possible to use the following method if a value for said evaporator temperature Te is available, for example a detection with an external ambient sensor even not in the proximity of the evaporator or as an alternative preset values as a function of the season and time or even a fixed value that represents a reliable estimate of the average value. It is however preferable to have at least two values, for example a value representative of the day rather than the night or of the summer rather than winter months.

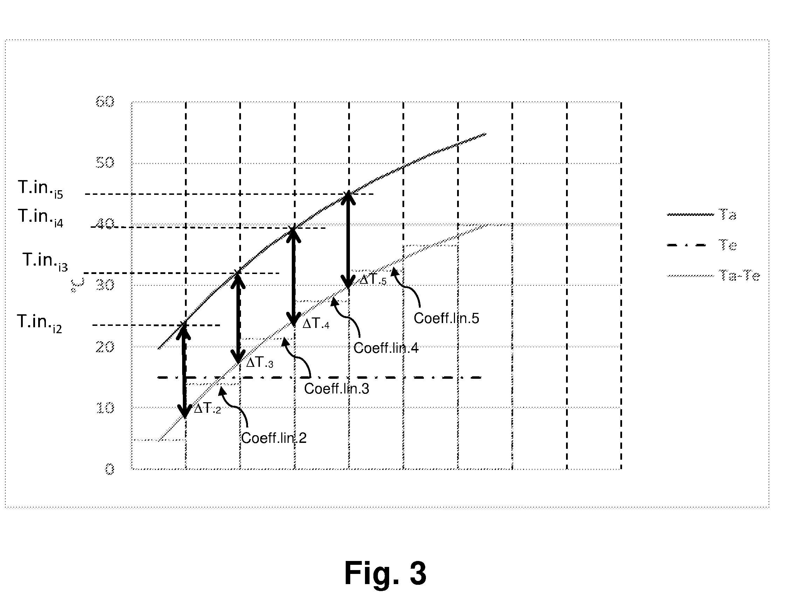

Advantageously the linearity coefficient Coeff.lin.k, and therefore the COP, is not considered as constant per a predefined storage temperature segment k, but constant for a segment kd, of the delta between the condenser temperature Tc (in the case of heating can be approximated to the storage temperature Ta) and evaporator temperature Te. Once the current values of the delta and storage temperature Ta are known, the segments k of the storage temperature Ta are calculated such that when the delta is comprised in a segment kd, the storage temperature is comprised in a segment k to which the linearity coefficient Coeff.lin.k corresponding to the segment kd is associated. In practice the temperature of the evaporator is considered as constant during the heating process. A possible improvement consists of repeating the segments k definition procedure if the temperature of the evaporator varies beyond a predefined threshold. In the case of a variable speed $\omega$ compressor, it is possible to correct said linearity coefficient Coeff.lin.k based on said speed $\omega$ using tables, experimental formulas or theoretical calculations always with methods known to the person skilled in the art. With reference to Figure 3, the values $\Delta$T.kd, $\Delta$T.kd+1 are the extremes of the segments kd of the delta between storage temperature Ta and evaporator temperature Te; the control card 2 on the basis of such parameters which it reads from its memory, calculates the extremes T.in.k of the segments k of the storage temperature Ta with the same linearity coefficient Coeff.lin.k. Figure 3 shows, for a specific temporal trend of the temperatures, how the extremes of the segments k of the storage temperature Ta coincide with the preset extremes $\Delta$T.kd of the delta between said storage temperature Ta and evaporator temperature Te.

It should be noted that advantageously, during the estimation, even in the case in which the evaporator temperature Te is acquired through a sensor, said value can be considered as constant. Therefore, the difference with respect to the previous method consists in the fact that the extremes of the storage temperature segments Ta are not preset but calculated as a function of the evaporator temperature Te.

The forecast conditioning time and the usage time t.target being known, the control card 2 determines the activation time t.ON.

The precautionary estimate reduces the risk of failure to reach the target temperature T.target within the usage time t.target, in fact an overestimated conditioning time and therefore an early activation, allows reducing the conditioning power, if necessary, without compromising the performance.

The linearity coefficients Coeff.lin, Coeff.lin.k have the physical meaning of the ratio of heat capacity to efficiency for each storage and may be estimated by the person skilled in the art with a characterisation in laboratory or through mathematical models; according to this solution these coefficients are preset in the control card 2.

**Estimation of time with learned conditioning gradient**

The estimation of the conditioning time t.cond may be further improved by using temperature gradients learned on the basis of the real temperature trend rather than linearity coefficients Coeff.lin, Coeff.lin.k preset in memory for all the devices of a same model.

A preferred method for calculating the conditioning gradient is described in WO 2019/025850, which has the advantage of detecting the overall conditioning speed not affected by turbulence at the temperature measuring point, therefore, it removes one of the main error causes.

The conditioning here is approximated with a linear curve with a conditioning gradient Grad.T:

$$(T.end - T.in) = Grad.T * t.cond$$

Where T.in is a generic starting temperature and T.end a final temperature. Said document is referred to constant power conditioning, on the other hand in the present invention the conditioning power is variable, and therefore also the conditioning gradient Grad.T must be considered as variable.

For the purposes of the present invention, according to a possible solution, said gradient may be approximated with a vector of gradients Grad.T.ip each valid for a power interval ip with average value P.cond.ip, therefore given a conditioning forecast power P.f included in said power interval ip, said gradient Grad.T.ip learned on the specific model of said device 101 and possibly on the installation configuration during use is used.

For gradients Grad.T.ip, the method requires that the conditioning power remains equal to the value P.cond.ip for a time defined by the person skilled in the art, an event that may occur either naturally either forcibly if the control card 2 keeps said conditioning power as constant for the time necessary to make the estimate. Therefore, a possible procedure is to divide the possible excursion by the conditioning power into np intervals and to calculate the valid conditioning gradient Grad.T.ip with sufficient approximation in a power interval ip with known methods. Calculated and appropriately saved in the memory, said conditioning gradient Grad.T.ip, to estimate the conditioning time t.cond needed to condition from the current temperature T.curr to the target temperature T.target with a forecast power P.f for conditioning comprised within said interval ip it is possible to calculate:

$$t.cond = (T.target - T.curr) / Grad.T.ip$$

The accuracy may be improved by calculating valid gradients for temperature segments k from an initial temperature T.k.in at a final temperature T.k.end:

$$t.cond.k = (T..k_{end} - T.k.in) / Grad.T.ip$$

without departing from the described inventive idea, in this case the estimate of the overall time is obtained from the sum of the times for temperature segments.

**Estimation of a linearity coefficient independent of the power**

Advantageously, it is possible to avoid repeating the calculation for different power values, by estimating the linearity coefficient Coeff.lin, rather than said gradient Grad.T.ip. The advantage is that said coefficient is independent of the power; in fact, it is equal to the ratio of a specific conditioning power P.cond.ip to the corresponding conditioning gradient Grad.T.ip; we have:

$$\text{Grad.T.ip} = \text{P.cond.ip/ Coeff.lin}$$

$$\text{Coeff.lin} = \text{P.cond.ip / Grad.T.ip}$$

For greater accuracy, instead of a single linearity coefficient Lin.Coeff, it is possible to estimate a vector of linearity coefficients, in which each linearity coefficient Lin.Coeff.k is valid for each segment k of temperature, thus for a gradient detected in a segment k of temperature the formula holds:

$$\text{Coeff.lin.k} = \text{P.cond.ip / Grad.T.ip}$$

The estimation and usage of the actual gradient rather than a calculation based on the factory value and on the nominal power, advantageously cancels tolerances in the consumption of the conditioning elements and partly the errors deriving from variations in the supply voltage that modify the actual heat power delivered by the conditioning elements 103.

**Alternative method of linearity coefficient calculation independent of the power for calculating the conditioning time for the heat pump**

The described linearity coefficient method may also be applied to estimate the conditioning time with a heat pump. Alternatively, an even better estimate precision may be obtained if the linearity coefficients Coeff.lin.k are calculated for temperature segments defined each time by the control card 2 so that the difference between the storage temperature Ta and current evaporator temperature Te belongs to preset segments kd, as already described. In the case of a variable speed compressor, the calculation of the linearity coefficients Coeff.lin.k also takes into account the speed $\omega$ of the compressor, therefore when estimating the time an expected value foreseen for said speed is used.

**Optimisation of the predicted power estimate with user adjustment**

The performance of the control algorithm depends on the parameter K used for the estimated conditioning power Pf: an advance in reaching the target temperature T.target leads to an increase in heat standing losses caused by the longer time for which the target temperature T.target needs to be maintained, but it increases the risk of not reaching the set temperature within the time required in case of unforeseen needs to reduce the conditioning power.

**Optimisation of the estimate with automatic adjustment**

Here some possible alternatives to improve the estimate and overcome the mentioned drawbacks that may derive from incorrect settings of the parameter K are described.
According to a first method, the parameter K may be modified by the user, who may increase it to decrease any heat standing losses and reduce it if the conditioning device 101 does not reach the target temperature T.target within the usage time t.target. In a second method that may also coexist with the first the control card 2 modifies the value of K, reducing it in the event that the target temperature T.target is not reached within the usage time t.target, and increasing it if the time within which the target temperature T.target is reached is much earlier than the usage time t.target.

**Forecast power learning**

Advantageously, to obtain a more accurate forecast of the conditioning time and therefore of the activation time t.ON, it is possible to process a reliable estimate of the forecast power P.f for conditioning, even more preferably an estimate P.f.i for specific time intervals i.
Consumption patterns in the user facility depend on the consumers habits which follow a daily and weekly routine; therefore it is possible to learn the recurring pattern represented by the power absorbed as an average over time intervals i.

Said time intervals may be preset in the memory of said control card 2 or self-learned for example by identifying periods in which the used power P.used undergoes limited variations or alternatively other known methods.

Therefore, in an interval i the forecast power P.f.i is deduced from the average values detected in the same interval in the previous cycles; therefore, the forecast power P.f.i is considered equal to the total power available for the conditioning on average in an interval i, and the estimation problem leads back to the problem of detecting said total power available. How to learn this forecast power P.f for the installation cases already considered will be described, starting from the case in which the deliverable power P.em is constant, for example because it is supplied exclusively by the grid without the supply of energy from variable renewable sources. In this case the forecast power P.f.i in an interval i is substantially the sum of said used conditioning power P.cond and said residual available power P.av averaged over at least one previous interval i. It will be shown that there are several ways to determine the forecast power P.f.i and that this is possible even in the more general case in which the available power P.av is not known to the control card 2.

The control card 2 has preset a breakdown of the day in at least two time intervals, for each day of the week, in which t.i is the starting instant of the time interval i and it is stored in said control card 2. For each interval i of the division, said control card 2 has set in memory the start time and the end time.

A possible solution for the estimation is to directly set the forecast power equal to the conditioning power:

$$P.f.i = P.cond.i$$

where P.cond.i is the conditioning power averaged over an interval i.

However, the possibility that the conditioning power is momentarily reduced, perhaps by other algorithms, may not be excluded. Furthermore, it is preferred to be able to estimate the forecast power even at times when there is no active conditioning phase.

Therefore, according to a preferred and possible solution, in the case in which the available power P.av is known to the control card 2, the forecast power P.f.i is calculated with the relation:

$$P.f.i = minimum \ (P.cond.i + P.av.i - P.toll, \ P.nom)$$

Stating that the forecast power P.f is equal to the minimum between the nominal power P.nom and the sum of conditioning power P.cond and available power P.av minus a tolerance P.toll. Where the index i indicates averaged quantities in the interval i with known methods and P.toll is a tolerance value set by a person skilled in the art with a value greater than or equal to zero. Said average values may be obtained with known methods without detracting anything from the inventiveness of the method.

Once the forecast power for each time interval i has been learned, in the estimation step to calculate a conditioning time interval within the time interval i, the linear or piecewise formula is used for the time:

$$t.cond.k._i = (T.k + 1 - T.k) * Coeff.lin.k \ / \ P.f.i$$

where t.cond.k.i is the time for conditioning from a temperature T.k to a temperature T.k + 1 with the forecast power P.f.i in the time interval i.

In the event that several tanks are active, in the learning phase the conditioning power P.cond corresponds to the sum of the conditioning powers for the active tanks, and in the step of estimating the conditioning time, with the priority of the tanks being equal, if the forecast power P.f is less than the nominal power P.nom of the tanks, it is possible to calculate a forecast power for each storage P.f.i.j for example by recognising for each storage a share of power proportional to its own nominal power or, alternatively, the person skilled in the art may set appropriate algorithms.

**Average power learning with power supply from renewable source**

In the more general case in which there is also a power supply from a renewable source, nothing prevents the same calculation from being replicated, as even the renewable source, at least in stable weather conditions follows a foreseeable daily trend. Alternatively, if a current measurement and a forecast of the power from renewable sources P.pv are provided, it is possible to take them into account with the following method:

step 1: the control card 2 estimates only the forecast power share coming from the grid P.f_contr.i by separating the power from renewable source P.pv, which is known because it is communicated by said renewable power control unit Pv 5; the formula in this case is:

$$P.f\_contr.i = P.cond.i + P.av.i - P.pv.i - P.toll$$

Step 2: when estimating the conditioning time t.cond, the control card 2 receives an estimate of the forecast power expected from the renewable source P.f_pv.i, this value may be communicated by other devices external to the object of the invention or alternatively, the control card may use a fixed or predetermined default value based on time and season;
step 3: the control card 2 calculates the total estimated power P.f.i with the sum:

$$P.f.i = P.f\_contr.i + P.f\_pv.i$$

**Average power learning if available power is not known**

If the control unit 4 is unable to detect or communicate the available power P.av, the control card 2 may use the conditioning power P.cond.i as an indicator and calculate the forecast power as:

$$P.f.i = P.cond.i$$

It should be noted that in this case the forecast power P.f could be less than the available power, but the probability of this happening is low enough that the object of the invention can be still achieved. It should also be noted that with such method it is possible to learn the available power only in the periods in which a conditioning request is active (i.e. the period that begins at the activation time t.ON of the conditioning and ends when the temperature T.end.cond is reached), while in the other periods it is preferable to assign a predefined value to said forecast power P.f.i and to disable the calculation.

For the calculation of the average values, the control card 2 applies known methods, 2 by way of an example it may carry out a current average at each sampling instant with the usual formula:

$$P.cond.i = (P.cond(h-1) * (h-1) + P.cond(h)) / h, h = 1 \ldots t.n$$

Where P.cond(h) is the conditioning power read at the sampling instant h in the interval i, t.n is the number of samples relative to the interval i, P.cond.i is the average among all the values sampled in the interval i.

**Estimate of conditioning time - switching on time**

The described method allows to obtain the conditioning time t.cond at least in a temperature segment k to which said linearity coefficient Coeff.lin.k is associated and a time interval i to which a forecast power P.f.i is associated:

$$t.cond.k._i = (T.k+1 - T.k) * Coeff.lin.k / P.f.i$$

since the forecast power available is piecewise constant, the temperature curve is a piecewise linear curve of which the slope and end point are known (t.target, T.target), see figure 4.

To calculate the activation time t.ON of the conditioning, we could proceed with an iterative method starting from a generic instant, but this would be complex. Alternatively, average values could be used and obtain in any case acceptable results for the purposes of the invention.

Several methods are possible to calculate average values; by way of an example a possible method is described: instead of the values P.f.i, it is possible to calculate an average forecast power P.f.m equal to the average of the values P.f.i associated with the time intervals comprised between the current time t.curr and the usage time t.target with extreme intervals included. Instead of the linearity coefficients Coeff.lin.k it is possible to use a single average linearity coefficient Coeff.lin.m equal to the weighted average of said linearity coefficients Coeff.lin.k where the weight for each segment k is proportional to the overlap between said temperature segment k and said excursion between current temperature T.curr and target temperature T.target.

Therefore, according to this possible solution, the control card 2 calculates the conditioning time t.cond as a linear function of the difference between the target temperature T.target and current temperature T.curr having as forecast power the average of the forecast powers P.f.i. weighted with the lengths of the relative time intervals comprised between the current time t.curr and the usage time with extreme intervals included and as a linearity coefficient the average of the linearity coefficients weighted with the lengths of the temperature segments k comprised between the current temperature T.curr and the target temperature T.target

$$t.cond = (T.target - T.curr) * Coeff.lin.m / P.f.m$$

$$P.f.m = average\ P.f.i$$

$$Coeff.lin.m = average\ Coeff.lin.k$$

Another possible method for determining the activation time is by trial and error and consists in repeatedly calculating the temperature reachable at the usage time t.target in the case in which the conditioning activates at the current time t.curr. As long as a temperature higher than the target temperature T.target is obtained for the usage time t.target, is too early to activate the conditioning; when repeating the calculation for the first time a temperature at the usage time t.target close to the target temperature T.target is obtained, then t.curr is an instant close to the correct activation time t.ON and it is possible to activate the conditioning. This method suffers from an error that may be reduced by increasing the frequency of the calculation, but the disadvantage remains that it is basically a trial-and-error method, so it is necessary to repeat the calculation.

**Backward calculation of the switching on time**

As an alternative to the calculation using said average values and trial methods, it is possible to obtain the activation time t.ON starting from the final point (t.target, T.target) and reconstruct the heat excursion backwards by calculating the initial temperatures for each time interval at constant power. See Figure 4 for an example of a piecewise linear curve from point (t.ON, T.curr) to point (t.target, T.target). A possible algorithm that applies the backward reconstruction with the linearity coefficient method is illustrated below.
The control card 2 performs the following steps:

- step 1: initialising the parameters:

    - identifying i.target the interval in which the usage time t.target falls,
    - calculating the initial temperature $T.in.i_{.target}$ necessary at the beginning of said interval, to reach the target temperature T.target on the basis of the linearity coefficient Coeff.lin.k, associated with the interval k in which said target temperature T.target falls and on the basis of said forecast power $P.f._{i.target}$ for the interval $i._{target}$ interval as:

$$T.in._{i.target} = T.target - \Delta T._{i.target} =$$

$$= T.target - P.f._{i.target}/ Coeff.lin.k * (t.target - t._{i.target})$$

    where $t.i._{target}$ is the start time of the period i.target,
    - if $T.in.i = T.in._{i.target}$, setting $t._i = t._{i.target}$ and switching to step 2 for the verification.

- step 2: verifying if the initial temperature $T.in._i$ of the current inteval is greater than the current temperature T.curr and the initial time t.i is greater than the current time t.curr, a circumstance in which the conditioning should have started at least in the previous interval, i.e.:

    - if T.in.i > T.curr and t.i > t.curr setting i = i - 1 and going to step 3 to scroll to the next interval i,
    - otherwise

        - if $T.in._i$ > T.curr, and $t._i$ < t.curr,

- setting t.ON = t.curr, activating the conditioning and ending the procedure,

- if T.in.i < T.curr setting i = i - 1 and going to step 4 to calculate said activation time t.ON;

- step 3: calculating the initial temperature T.in.i in said current interval i with the formula:

$$T.in._i = T.in._{i+1} - P.f.i / Coeff.lin.k * (t._{i+1} - t._i)$$

- going to step 2;

- step 4: calculating the time necessary for conditioning from T.curr to said initial temperature of said successive interval T.in.i+i and obtaining said activation time t.ON with the formula:

$$t._{i+1} - t.ON = ( T.in._{i+1} - T.curr ) * Coeff.lin.k / P.f.i$$

$$t.ON = t._{i+1} - ( T.in._{i+1} - T.curr ) * Coeff.lin.k / P.f.i$$

- and ending the procedure.

According to a possible variant at step 4 it is possible to use the real available power P.av in place of the forecast power P.f.i and this is preferable in the case in which said available power P.av is lower than the forecast power P.f.i.

For each iteration, the linearity coefficient Coeff.lin.k may be advantageously selected for the segment k to which the final temperature of the interval i belongs.

**Case in which an interval i corresponds to a thermal excursion that embraces segments k with a different linearity coefficient**

If the temperature excursion in the time interval i at constant power includes temperature segments k to which different linearity coefficients Coeff.lin.k. are assigned, linearity coefficients k; for the value of linearity coefficients Coeff.lin.k in the formula it is possible to take the average between the linearity coefficients assigned to the temperature segments crossed with the thermal excursion during said time interval i, preferably the weighted average with the percentage overlap of each segment k on said heat excursion.

More specifically, given a subdivision of the storage temperature Ta into segments k such that each corresponds to a linearity coefficient Coeff.lin.k and given a final temperature $T._{i+1}$ and an initial temperature $T._i$ such that $T._i$ and T.i+i respectively belong to segments k' and k''' to which the linearity coefficients Coeff.lin.k' and Coeff.lin.k'' respectively correspond, an average linearity coefficient may be calculated as a weighted average linearity coefficient among the linearity coefficients: Coeff.lin.k 'and Coeff.lin.k'', with the weights respectively proportional to the overlap between the temperature segment (Ti, Ti + 1) and the segments k' and k'' and any linearity coefficients Coeff.lin.k corresponding to any intermediate segments k' and k'' with unit weight.

**Case of multiple storages**

In the description, reference has been made to the storage as if consisting of a single storage, but water heaters consisting of multiple storages are increasingly used; the design choice may be dictated by both aesthetic and functional reasons. Similarly, if the conditioning consists of room heating or cooling, each room could be considered as a distinct storage.

All the methods described also apply to the case of multiple storages, with the following variants: the quantities target temperature T.target, current temperature T.curr, usage time t.target, conditioning time t.cond, nominal power P.nom, conditioning power P.cond and temperature are referred to the single storages and may be indicated respectively with T.target.j, t.target.j, t.cond.j, P.nom.j, P.cond.j, T.curr.j, where P.cond corresponds to the sum of the conditioning powers P.cond.j by storage. The preset or estimated parameters such as efficiency of the conditioning process eff and linearity coefficients Coeff.lin and Coeff.lin.k, and relative extremes of the temperature segments T.k. may be indicated respectively with eff.j, Coeff.lin.j and Coeff.lin.j.k. In this case the pre-setting and estimate are made by single storage. In all the cases in which the conditioning power must be reduced with respect to the nominal value, it is clear that different strategies are possible, by way of an example, the control card 2 may be preset with priority values by storage or the division of the available power may be equal in absolute value or in proportion to the value of each storage j. In the estimation step, the estimated power may advantageously be divided by single storage by following similar priority or equal division logics.

**Conditioning time estimate update**

Advantageously, the calculation of the activation time may be repeated to take into account updated values of the current temperature and of the available power P.av.

**Notification and energy requirement**

In case in step 2 of verification of the previous method the control unit detects that

$$T.in.i > T.curr, \text{ and } t.i < t.curr$$

it has substantially found that in order to reach the target temperature T.target at the usage time t.target the conditioning should have started previously. In this situation, the control card 2 knows in advance that it will probably not be possible to reach the target temperature T.target, and may advantageously carry out notification strategies, such as by way of a non-limiting example, calculate and communicate externally the temperature foreseen for the usage time t.target or the estimated time to reach the set temperature, signal the risk of not reaching said target temperature T.target.

Said actions may be complemented by a notification on user interface, such as showing a suitable message on any display, turning on or flashing a warning light or emitting a notification signal; the notification to the user is disabled if the user intervenes on the user interface. According to alternative methods, the control card 2 could have communication means with other household or remote devices to which a message may be sent for the user, or alternatively if the user has intelligent loads, the control card 2 is able to send an energy request signal; the reception of the signal could cause the switching off of some loads and free up the power necessary for the conditioning function.

**Switching to the next consumption threshold**

Electricity supply contracts are possible in which, instead of providing for a single maximum threshold of power that can be drawn, more intermediate thresholds of ever-increasing power are envisaged, exceeding each of which the cost of the drawn energy increases until reaching the power maximum threshold which for the determined period mentioned above, the power supply is disconnected.

A method is possible according to which, in addition to taking care not to exceed the maximum absorbable contractual power P.contr for more than the limited time interval Δt.max allowed without causing the power supply to be disconnected, it is decided, at predetermined time intervals, whether it is necessary to switch to a more expensive power threshold or vice versa it is possible to go below a cheaper power threshold.

Advantageously, it is possible to switch to a more expensive threshold if it is found that it is not possible to reach the target temperature T.target within the usage time t.target with the forecast power P.f. By way of an example, this case is considered in step 2 of the method of calculation of the switching on time t.ON.

Defined i.th as the consumption band index in general is
if t.cond> remaining time for t.target i.th = i.th + 1

$$P.contr = P.rate.i.th.$$

Where P.rate.i.th is the maximum power threshold in the range i.th. Advantageously, it is possible to revert to the less expensive power threshold when the target temperature T.target is reached, therefore the control card 2 sets

$$i.th = 1$$

$$P.contr = P.rate.i.th.$$

**Version in which the maximum over consumption time is null**

All the solutions described up to now assume that the over consumption can persist for a limited time $\Delta t.max$ since this is compatible with the purposes. It is also possible to avoid said over consumption.

Advantageously, the control card 2 before activating a conditioning step or in any case before increasing the conditioning power, verifies that the available power P.av is greater than the increase in the conditioning power.

**Generalisation to conditioning**

Up to now, we have talked about conditioning process in a storage but what has been said finds similar application and may be generalised to the case of cooling, for example carried out with a heat pump. In this case the temperature is conditioned in a room rather than in a tank. Therefore, the method described is true by replacing the term storage with the term environment or room, a conditioning element may be an air conditioning resistance or an exchanger of a heat pump. Clearly, the thermodynamic processes follow the same rules and possibilities for estimating times. The adjustment of the conditioning power may also be done in this case with, for example, a variable speed heat pump as already described.

From the description the achievable advantages are clear, in particular if the available power prediction is correct, the target temperature is reached at the usage time

**Claims**

1.  Method for conditioning a fluid at a target temperature (T.target) within a desired usage time (t.target), by means of a device (101) that controls a conditioning element adapted to condition a fluid in a storage where said device is powered by electrical energy, and is part of an electrical user facility wherein it shares the deliverable power (P.em) with other electrical loads,

    - where said deliverable power (P.em) is defined as the sum of the contractual power (P.contr) that is the maximum power deliverable by the grid and, if present, of power coming from a renewable source (P.pv),
    - and where in said user facility there is the restriction that the overall used power (P.used) by said loads does not exceed said deliverable power (P.em) for more than a limited time interval ($\Delta t.max$),
    - and said user facility being equipped with means capable of detecting at least whether said used power (P.used) is greater than said deliverable power (P.em),
    - and said device (101) being equipped with a control card (2) adapted at least to:

        - detect the storage temperature (Ta) in said storage,
        - keep in a memory parameters comprising said target temperature (T.target) and said usage time (t.target) and perform calculations on said parameters,
        - modulate a conditioning power (P.cond) of said conditioning element;

    the method being **characterized in** comprising the following steps:

        - determine an activation time (t.ON) such that said fluid reaches said target temperature (T.target) within said usage time (t.target) and said conditioning power (P.cond) is a forecast power (P.f) lower than or equal to the nominal power (P.nom) of said conditioning element
        - at said activation time (t.ON) start a conditioning step and set the conditioning end temperature (T.end.cond) equal to said target temperature (T.target);
        - during said conditioning step, periodically carry out the following checks:

            - if said used power (P.used) plus a tolerance value (P.toll) not lower than zero exceeds said deliverable power (P.em) then
            - detect the time of over consumption (t.sovr) at which that occurs and
            - reduce said conditioning power (P.cond) until said used power (P.used) added to said tolerance (P.toll) no longer exceeds said deliverable power (P.em), within said limited time interval ($\Delta t.max$) from said time of over consumption (t.sovr), defined in the memory of said control card (2) and as long as said conditioning power (P.cond) remains greater than zero;
            - if said conditioning end temperature (T.end.cond) is reached, end said conditioning step.

2. Method according to claim 1,
**characterised by** the fact of
detecting an available power (P.av) defined by the difference between the deliverable power (P.em) and the used power (P.used) and adjusting said conditioning power (P.cond) as follows:

- during said conditioning step, detecting said available power (P.av) given by the difference between said deliverable power (P.em) and said used power (P.used);
- if said available power P.av is lower than said tolerance P.toll:

- detecting said time of over consumption (t.sovr) at which this occurs and before said limited time ($\Delta$t.max) has elapsed from said time of over consumption (t.sovr), reducing said conditioning power (P.cond) by an amount $\Delta$P.cond at least equal to said available power (P.av) minus said tolerance (P.toll) and in any case at most equal to said conditioning power (P.cond), a reduction obtainable with a complete shutdown; in formulas:

$$\Delta P.cond <= P.av - P.toll,$$

where a negative conditioning power variation $\Delta$P.cond indicates a reduction and the maximum reduction is equal to said conditioning power (P.cond) and where said tolerance (P.toll) is greater than or equal to zero;

- alternatively, adjusting said conditioning power (P.cond) to the maximum value such that said available power P.av, minus said possible tolerance value P.toll, is not negative, setting a variation $\Delta$P.cond for said conditioning power as follows:

$$\Delta P.cond = P.av - P.toll$$

and where the maximum reduction is equal to said conditioning power (P.cond) and the maximum increase is equal to the difference between said conditioning nominal power (P.nom) and said conditioning power (P.cond) and where said tolerance value (P.toll) is greater than or equal to zero.

3. Method according to any one of the previous claims,

where the activation time (t.ON) is calculated as the usage time (t.target), saved in memory, minus a conditioning time (t.cond), which is estimated as a function of the difference between the target temperature T.target and the current temperature T.curr, with a piecewise linear curve for at least one segment with a gradient equal to the ratio of a linearity coefficient (Coeff.lin; Coeff.lin.k) to a forecast power P.f (P.f.i), which is lower than or equal to said nominal power (P.nom), where said linearity coefficient Coeff.lin; Coeff.lin.k is equal to the ratio of thermal capacity Cap.ter to conditioning efficiency (eff; eff.k),

$$Coeff.lin.k = Cap.ter/eff.k$$

and where eff.k is the efficiency of the conditioning process in an interval k of storage temperature (Ta), and Coeff.lin.k is the linearity coefficient. Said linearity coefficient Coeff.lin; Coeff.lin.k is known and independent of said forecast power (P.f); the method comprising the following steps:

- if the piecewise linear curve has a single segment (k), only one linearity coefficient is defined,

- reading from the memory said linearity coefficient Coeff.lin.k, available either because it is factory preset or because it is estimated, for which the following formula is valid:

$$t.cond = (T.target - T.curr) * Coeff.lin.k / P.f$$

where t.cond is an estimate of the conditioning time, T.curr is the current temperature;

- otherwise, ifthe piecewise linear curve has at least two temperature segments (k) with different linearity coefficients Coeff.lin.k, estimating said conditioning time t.cond as the sum of the conditioning time for each temperature segment (k) with the following method:

- identifying among those in memory the initial segment k.in and the end segment k.end to which respectively said current temperature (T.curr) and said target temperature (T.target) belong;
- if said segments coincide, reverting to the previous case of only one linearity coefficient, otherwise:
- reading from the memory the two linearity coefficientsCoeff.lin.k.in and Coeff.lin.k.end relating to said initial k.in and final segment k.end;
- reading from the memory the final temperature $T.k.in_{+1}$ of the initial segment k.in of the conditioning, which is the segment including the current temperature T.curr and the initial temperature T.k.end of the end k.end segment at the end of conditioning which includes the target temperature T.target (in case of two segments such values coincide)
- calculating the time interval t.cond.k.in corresponding to said initial segment k.in as:

$$t.cond.k._{in} = (T.k._{in+1} - T.curr) * Coeff.lin.k._{in} / P.f$$

- calculating the time interval corresponding to said end segment k.end as:

$$t.cond.k._{end} = (T.target - T.k._{end}) * Coeff.lin.k._{end} / P.f$$

- if it has been divided into more than two segments

- reading from the memory the extremes T.k.in+1, ..., T.k.end-1 that define the further subdivision of said temperature range;
- for each of said segments k reading from the memory said linearity coefficient Coeff.lin.k and calculating:

$$t.cond.k = (T.k+1 - T.k) * Coeff.lin.k / P.f$$

wherein t.cond.k is the sub-interval of time necessary to condition the fluid from an initial temperature T.k of a segment k to an end temperature T.k+1 with said forecast power P.f;
- calculating said conditioning time (t.cond) as a sum of all of said segments t.cond.k with k = $k._{in}$, ..., $k._{end}$.

4. Method according to the previous claim,
**characterised by** the fact of estimating said activation time (t.ON) for a heat pump according to the following steps:

- reading from the memory the endpoints (ΔT.1, ..., ΔT.kd, ..., ΔT.m) of consecutive segments that constitute a subdivision of the difference between a temperature representative of the condenser temperature (Tc) and a temperature representative of the evaporator temperature (Te), such extremes are preset in the memory such that to every said segment (kd) corresponds a linearity coefficient Coeff.lin.k;
- if said at least one conditioning element is a variable speed (ω) heat pump, correcting said linearity coefficient Coeff.lin.k on the basis of said speed (ω);
- detecting a representative value of said difference between a temperature representative of the condenser temperature (Tc) and a temperature representative of the evaporator temperature (Te), and detecting said storage temperature (Ta);
- calculating and saving in memory the segments (k) where said storage temperature (Ta) belongs when said difference is comprised in a segment (kd),
- at each segment (k), of said storage temperature (Ta) associating the relative linearity coefficient (Coeff.lin.k).

5. Method according to any one of the previous claims 1 or 2, **characterised by** the fact of determining said activation time (t.ON) on the basis of an estimate of said conditioning time (t.cond) based on a temperature gradient (Grad.T; Grad.T.ip) or a vector of gradients (Grad.T.ip) each valid for a power interval (ip) of the conditioning power and learned on the specific model of said device (101) and dependent on said forecast power (P.f), , the method comprising the following steps:

- subdividing the range for said conditioning power (P.cond) into (np) intervals and for each one of said intervals (ip):

    - starting a conditioning step with said conditioning power (P.cond) equal to the average value of the conditioning power (P.cond.ip) in said interval (ip);
    - learning and saving in memory said conditioning gradient Grad.T.ip, equal to the temperature variation per units of time;

    - given said forecast conditioning power (P.f) comprised in said interval (ip), calculating the corresponding said conditioning time t.cond from the current temperature T.curr to said target temperature T.target with the formula

$$t.cond = (T.target - T.curr) / Grad.T.ip$$

    - reading from the memory said desired usage time (t.target);
    - calculating said activation time (t.ON) as said desired time (t.target) minus said conditioning time t.cond.

6. Method according to any one of claims 3 or 4,
**characterised by** the fact of
learning said one or more linearity coefficients (Coeff.lin; Coeff.lin.k) on the specific model of said device (101) and possibly on the installation conditions, during use, through the following steps:

    - learning and saving in memory a conditioning gradient Grad.T.ip corresponding to a current conditioning power P.cond.ip and to a temperature range comprised in a segment (k) of temperatures;
    - calculating a linearity coefficient (Coeff.lin; Coeff.lin.k), equal to the ratio of said current value of conditioning power P.cond.ip to said gradient Grad.T.ip with the formula:

$$Coeff.lin = P.cond.ip/Grad.T.ip$$

    where Coeff.lin is the linearity coefficient which allows calculating the conditioning time t.cond, knowing the target temperature T.target, the current temperature T.curr and the forecast power P.f with e formula: t.cond = (T.target - T.curr) * Coeff.lin / P.f.

7. Method according to any one among claims 1 to 6, **characterised by** the fact of

    - estimating said conditioning time (t.cond) having learned said forecast power (P.f) according to the following steps:

        - having preset and/or self-learned with known methods a division of the day into at least two time intervals, for each day of the week, wherein for each interval (i) of the division, the start time and the end time are known;

    - learning the forecast power (P.f.i) for every said time interval (i) according to the following steps:

        - detecting the beginning of a new interval (i);
        - calculating and saving in memory said forecast power P.f.i in said interval (i) by applying the formula:

$$P.f.i = P.cond.i$$

    - where P.cond.i is the conditioning power average during a time interval i;
    - estimating said part of the conditioning time (t.cond.i) falling within an interval (i) of time using said P.f.i as said forecast power (P.f).

8. Method according to any one among claims 2 to 6,
**characterised by** the fact of estimating said conditioning time (t.cond) having learned said forecast power (P.f) comprising the following steps:

- having preset and/or self-learned with known methods a division of the day into at least two time intervals, for each day of the week, wherein for each interval i of the division, the start time and the end time are known;
- for every time interval (i), learning the forecast power P.f.i according to the following steps:

   - detecting the beginning of a new interval (i);
   - obtaining the average value P.av.i for said available power (P.av) and the average value P.cond.i for said conditioning power (P.cond) both in said interval (i) with known methods;
   - calculating and saving in memory said forecast power, P.f.i, in said interval (i) by applying the formula:

$$P.f.i = minimum\ (P.cond.i + P.av.i - P.toll, P.nom);$$

   where P.f.i is calculated as the minimum between the terms in parenthesis:
   P.toll is a tolerance value, P.nom is the nominal power of the heating element;
   - estimating said conditioning time t.cond.i within a time interval (i) using said value P.f.i as said forecast power (P.f).

9. Method according to the previous claim,
   **characterised by** the fact of
   further including, in said forecast power (P.f.i) for said time interval (i), a forecast power from renewable source (P.pv.i) for the same said period (i) by carrying out the following steps:

   - detecting the average power from renewable source P.pv.i for any period i and calculating a forecast contractual power P.f.contr.i, wherefrom said average power from renewable source P.pv.i is subtracted, by applying the formula:

$$P.f\_contr.i = P.cond.i + P.av.i - P.pv.i - P.toll$$

   where P.cond.i is the average value of the conditioning power, P.av.i is the average available power in the in the interval i and P.toll is a tolerance value;
   - receiving a forecast power from renewable source P.f_pv.i or using a fixed or predetermined default value based on time and season;
   - calculating said forecast power P.f.i for said time interval (i) with the sum:

$$P.f.i = P.f\_contr.i + P.f\_pv.i$$

10. Method according to any one of claims 7, 8, or 9
    **characterised by** the fact of
    estimating the conditioning time (t.cond) given an average forecast power (P.f) and an average linearity coefficient (Coeff.lin), as follows:

    - determining an average forecast power P.f.m as the average of the forecast powers per each time interval i (P.f.i) possibly weighted with the lengths of the relative time intervals i occurring between the current time (t.curr) and the usage time t.target with extreme intervals included;
    - determining an average linearity coefficient Coeff.lin.m, if linearity coefficients (Coeff.lin.k) are known for each of said temperature segments k, said average linearity coefficient Coeff.lin.m can be calculated as an average of the linearity coefficients (Coeff.lin.k) possibly weighted with the lengths of the temperature segments k comprised between the current temperature T.curr and the target temperature T.target;
    - calculating said conditioning time t.cond with the formula:

$$t.cond = (T.target - T.curr) * Coeff.lin.m\ /\ P.f.m$$

    - calculating said activation time t.ON as:

$$t.ON = t.target - t.cond.$$

**11.** Method according to any one of the claims 7, 8, or 9
**characterised by** the fact of
calculating said activation time t.ON to reach said target temperature T.target for said usage time t.target) by reconstructing the temperature excursion backwards as follows:

- step 1: initialising the parameters:

- identifying the time interval i.target within which said usage time t.target falls,
- for said time interval i.target calculating the initial temperature $T.in_{i.target}$ necessary, to reach said target temperature (T.target) on the basis of said linearity coefficient Coeff.lin.k, associated with the temperature interval k to which said target temperature T.target belongs and on the basis of said forecast power $P.f._{i.target}$ for said time interval i.targetas:

$$T.in._{i.target} = T.target - \Delta T._{i.target} = T.target - P.f._{i.target}/$$

$$Coeff.lin.k * (t.target - t._{i.target})$$

where $t.i._{target}$ is the start time of the period i.target,
- setting $T.in._i = T.in._{i.target}$, $t._i = t._{i.target}$ and going to step 2 for verification;

- step 2: checking if said initial temperature $T.in._i$ of the current period i is greater than said current temperature (T.curr) and said initial time t.i is greater than said current time (t.curr), in this case the conditioning must start at least in the previous period, i.e.:

- if T.in.i > T.curr and t.i > t.curr setting i = i - 1 and going to step 3 to skip by an interval i,
- otherwise

- if T.in.i > T.curr, and t.i < t.curr, setting t.ON = t.curr, activating the conditioning and ending the procedure,
- if T.in.i < T.curr

setting i = i - 1 and going to step 4 to calculate said activation time (t.ON);

- step 3: calculating said initial temperature T.in.i of said current interval i with the formula:

$$T.in._i = T.in._{i+1} - P.f.i / Coeff.lin.k' * (t._{i+1} - t._i)$$

where Coeff.lin.k' preferably is the linearity coefficient corresponding to the temperature segment containing the temperature $T.in._{i+1}$

- going to step 2;

- step 4: calculating the time needed to condition from said current temperature T.curr to said initial temperature of said subsequent interval T.in.i+1 and obtaining said activation time t.ON with the formula:

$$t._{i+1} - t.ON = ( T.in._{i+1} - T.curr ) * Coeff.lin / P.f.i \text{ from which}$$

$$t.ON = t._{i+1} - ( T.in._{i+1} - T.curr ) * Coeff.lin / P.f.i$$

**12.** Method according to claim 11
**characterised by** the fact of

using for said linearity coefficients (Coeff.lin.k) the specific values associated with said temperature segments k according to the following steps:

- given a subdivision of the storage temperature (Ta) into segments k such that each one corresponds to a linearity coefficient (Coeff.lin.k),
- given a final temperature (T.i+1) and an initial temperature (T.i) such that (T.i) and (T.i+1) belong respectively to the temperature segments k' and k" to which the linearity coefficients Coeff.lin.k' and Coeff.lin.k" respectively correspond, calculating an average linearity coefficient as a weighted average between:
- Coeff.lin.k' and Coeff.lin.k", with the weights respectively proportional to the overlap between the temperature segment [Ti, T.i+1] and the segments k' and k" and
- any linearity coefficients Coeff.lin.k corresponding to any intermediate segments between k' and k" with weight equal to 1.

13. Method according to one of the claims 10,11 or 12 **characterised by** the fact of

- detecting whether during the calculation of said activation time (t.ON) it is verified that T.in.i > T.curr, and t.i < t.curr where T.in.i is the initial temperature in the interval i, and t.i is the initial time of the interval i, and T.in.i and t.i represent a point in a stepwise linear temperature curve that allows reaching the target temperature by the usage time or following a new calculation said activation time (t.ON) is preceding the current time;

- if so, signalling that the remaining time for said usage time (t.target) is lower than said estimated conditioning time (t.cond).

14. Method according to any one of the claims from 2 to 13, **characterised by** the fact of comprising the following steps:

- detecting if the difference between said renewable source power (P.pv) and said used power (P.used), equal to the surplus power (P.sur), is greater than zero;
- if so:

    - setting said conditioning-end temperature (T.end.cond) equal to a predefined maximum temperature (T.lim) set in said control card (2) and greater than or equal to said target temperature (T.target) in case of heating and lower or equal in case of cooling;

    - if one of the conditions occurs: (a) said target temperature (T.target) is reached or (b) there is no active conditioning step, but less than a possibly settable time is missing for the activation,

        - starting or continuing a conditioning step by performing an adjustment of said conditioning power P.cond such that said surplus power P.sur is non-negative, imposing a variation ΔP.cond in the conditioning power as follows:

$$\Delta P.cond <= minimum\ (P.sur, P.nom - P.cond)$$

    - if said conditioning end temperature (T.end.cond) is reached, ending said conditioning step.

15. Device (101) for conditioning the temperature of a fluid in a storage suitable for installation in a facility, the device (101) comprising:

- the storage, a conditioning element powered by electrical energy, and a control card (2), the control card comprising:

    - means to detect a condition of over consumption based on signals from a communication channel (401; 402; 404);
    - means to modulate a conditioning power (P.cond) of said conditioning element;
    - memory means to store parameters comprising said target temperature (T.target) and said usage time (t.target) and perform calculations on said parameters;

- means to detect a temperature "Ta" in the storage;

and further configured to

- determine an activation time (t.ON) such that said fluid reaches said target temperature (T.target) within said usage time (t.target) and said conditioning power (P.cond) is a forecast power (P.f) lower than or equal to the nominal power (P.nom) of said conditioning element;
- reduce said conditioning power (P.cond) until said used power (P.used) added to said tolerance (P.toll) no longer exceeds said deliverable power (P.em), within said limited time interval (Δt.max) from said time of over consumption (t.sovr), defined in the memory of said control card (2) and as long as said conditioning power (P.cond) remains greater than zero;
- and apply the method according to any of the claims from 1 to 14.

**Patentansprüche**

1. Verfahren zum Konditionieren eines Fluids auf eine Zieltemperatur (T.target) innerhalb einer gewünschten Nutzungszeit (t.target) mittels einer Vorrichtung (101), die ein Konditionierungselement steuert, das geeignet ist, ein Fluid in einem Speicher zu konditionieren, wobei die Vorrichtung mit elektrischer Energie betrieben wird und Teil einer elektrischen Benutzereinrichtung ist, in der sie die lieferbare Leistung (P.em) mit anderen elektrischen Lasten teilt,

- wobei die lieferbare Leistung (P.em) als die Summe der vertraglichen Leistung (P.contr) definiert ist, das heißt der maximalen vom Netz lieferbaren Leistung, und, sofern vorhanden, der Leistung aus einer erneuerbaren Quelle (P.pv),
- und wobei in der Benutzereinrichtung die Einschränkung besteht, dass die von den Lasten verbrauchte Gesamtleistung (P.used) die lieferbare Leistung (P.em) für mehr als ein begrenztes Zeitintervall (Δt.max) nicht überschreitet,
- und wobei die Benutzereinrichtung mit Mitteln ausgestattet ist, die in der Lage sind, mindestens zu erkennen, ob die verbrauchte Leistung (P.used) größer als die lieferbare Leistung (P.em) ist,
- und wobei die Vorrichtung (101) mit einer Steuerkarte (2) ausgestattet ist, die mindestens geeignet ist, um:

- die Speichertemperatur (Ta) in dem Speicher zu erfassen,
- Parameter, die die Zieltemperatur (T.target) und die Nutzungszeit (t.target) umfassen, in einem Speicher zu speichern und Berechnungen zu diesen Parametern durchzuführen,
- eine Konditionierungsleistung (P.cond) des Konditionierungselements zu modulieren;

wobei das Verfahren **dadurch gekennzeichnet ist, dass** es die folgenden Schritte umfasst:

- Bestimmen einer Aktivierungszeit (t.ON) derart, dass das Fluid die Zieltemperatur (T.target) innerhalb der Nutzungszeit (t.target) erreicht und die Konditionierungsleistung (P.cond) eine prognostizierte Leistung (P.f) ist, die kleiner oder gleich der Nennleistung (P.nom) des Konditionierungselements ist,
- Starten eines Konditionierungsschritts zu der Aktivierungszeit (t.ON) und Einstellen der Endtemperatur der Konditionierung (T.end.cond) gleich der Zieltemperatur (T.target);
- regelmäßiges Durchführen der folgenden Kontrollen während des Konditionierungsschritts:

- wenn die verbrauchte Leistung (P.used) plus ein Toleranzwert (P.toll) von nicht weniger als Null die lieferbare Leistung (P.em) überschreitet, dann
- Erfassen des Zeitpunkts des Mehrverbrauchs (t.sovr), zu dem dieser auftritt, und
- Reduzieren der Konditionierungsleistung (P.cond), bis die verbrauchte Leistung (P.used), die zu der Toleranz (P.toll) addiert wird, die lieferbare Leistung (P.em) innerhalb des begrenzten Zeitintervalls (Δt.max) ab dem Zeitpunkt des Mehrverbrauchs (t.sovr), das im Speicher der Steuerkarte (2) definiert ist, nicht mehr überschreitet und solange die Konditionierungsleistung (P.cond) größer als Null bleibt;
- wenn die Endtemperatur der Konditionierung (T.end.cond) erreicht ist, Beenden des Konditionierungsschritts.

2. Verfahren nach Anspruch 1,
**dadurch gekennzeichnet, dass**
eine verfügbare Leistung (P.av) erfasst wird, die durch die Differenz zwischen der lieferbaren Leistung (P.em) und der verbrauchten Leistung (P.used) definiert ist, und die Konditionierungsleistung (P.cond) wie folgt eingestellt wird:

- während des Konditionierungsschritts, Erfassen der verfügbaren Leistung (P.av), die durch die Differenz zwischen der lieferbaren Leistung (P.em) und der verbrauchten Leistung (P.used) gegeben ist;
- wenn die verfügbare Leistung P.av niedriger als die Toleranz P.toll ist:

- Erfassen des Zeitpunkts des Mehrverbrauchs (t.sovr), zu dem dieser auftritt und bevor die begrenzte Zeit ($\Delta$t.max) seit dem Zeitpunkt des Mehrverbrauchs (t.sovr) verstrichen ist, Reduzieren der Konditionierungsleistung (P.cond) um einen Betrag $\Delta$P.cond, der mindestens gleich der verfügbaren Leistung (P.av) abzüglich der Toleranz (P.toll) und in jedem Fall höchstens gleich der Konditionierungsleistung (P.cond) ist, eine Reduzierung, die mit einer vollständigen Abschaltung erreichbar ist; in Formeln:

$$\Delta P.cond <= P.av - P.toll,$$

wobei eine negative Schwankung der Konditionierungsleistung $\Delta$P.cond eine Verringerung anzeigt und die maximale Verringerung gleich der Konditionierungsleistung (P.cond) ist und wobei die Toleranz (P.toll) größer oder gleich Null ist;

- alternativ Einstellen der Konditionierungsleistung (P.cond) auf den Maximalwert, so dass die verfügbare Leistung P.av abzüglich des möglichen Toleranzwerts P.toll nicht negativ ist, und Festlegen einer Variation $\Delta$P.cond für die Konditionierungsleistung wie folgt:

$$\Delta P.cond = P.av - P.toll$$

und wobei die maximale Reduzierung gleich der Konditionierungsleistung (P.cond) und die maximale Erhöhung gleich der Differenz zwischen der Konditionierungsnennleistung (P.nom) und der Konditionierungsleistung (P.cond) ist und wobei der Toleranzwert (P.toll) größer oder gleich Null ist.

3. Verfahren nach einem der vorhergehenden Ansprüche,

wobei die Aktivierungszeit (t.ON) als die im Speicher gespeicherte Nutzungszeit (t.target) abzüglich einer Konditionierungszeit (t.cond) berechnet wird, die als Funktion der Differenz zwischen der Zieltemperatur T.target und der aktuellen Temperatur T.curr geschätzt wird, mit einer stückweise linearen Kurve für mindestens ein Segment mit einem Gradienten, der dem Verhältnis eines Linearitätskoeffizienten (Coeff.lin; Coefflin.k) zu einer prognostizierten Leistung P.f (P.f.i) entspricht, die kleiner oder gleich der Nennleistung (P.nom) ist, wobei der Linearitätskoeffizient Coeff.lin; Coefflin.k gleich dem Verhältnis der Wärmekapazität Cap.ter zur Konditionierungseffizienz (eff; eff.k) ist,

$$Coeff.lin.k = Cap.ter/eff.k$$

und wobei eff.k die Effizienz des Konditionierungsverfahrens in einem Intervall k der Speichertemperatur (Ta) ist und Coeff.lin.k der Linearitätskoeffizient ist. Der Linearitätskoeffizient Coeff.lin; Coeff.lin.k ist bekannt und unabhängig von der prognostizierten Leistung (P.f); wobei das Verfahren die folgenden Schritte aufweist:

- wenn die stückweise lineare Kurve ein einziges Segment (k) aufweist, wird nur ein Linearitätskoeffizient definiert,

- Auslesen des Linearitätskoeffizienten Coeff.lin.k aus dem Speicher, der entweder verfügbar ist, weil er werkseitig voreingestellt wurde, oder weil er geschätzt wurde, für den die folgende Formel gilt:

$$t.cond = (T.target - T.curr) * Coeff.lin.k / P.f$$

wobei t.cond ein Schätzwert für die Konditionierungszeit ist, T.curr die aktuelle Temperatur ist;

- andernfalls, wenn die stückweise lineare Kurve mindestens zwei Temperatursegmente (k) mit unterschiedlichen Linearitätskoeffizienten Coeff.lin.k aufweist, Schätzen der Konditionierungszeit t.cond als die Summe der Konditionierungszeit für jedes Temperatursegment (k) mit dem folgenden Verfahren:

- Identifizieren des Anfangssegments k.in und des Endsegments k.end unter denen im Speicher, zu denen jeweils die aktuelle Temperatur (T.curr) und die Zieltemperatur (T.target) gehören;
- wenn die Segmente übereinstimmen, Zurückkehren zum vorherigen Fall mit nur einem Linearitätskoeffizienten, andernfalls:
- Auslesen der beiden Linearitätskoeffizienten Coeff.lin.k.in und Coeff.lin.k.end aus dem Speicher, die sich auf das Anfangssegment k.in und das Endsegment k.end beziehen;
- Auslesen der Endtemperatur T.k.in+i des Anfangssegments k.in der Konditionierung aus dem Speicher, das das Segment ist, das die aktuelle Temperatur T.curr und die Anfangstemperatur T.k.end des k.end Endsegments am Ende der Konditionierung enthält, das die Zieltemperatur T.target enthält (im Falle von zwei Segmenten stimmen diese Werte überein)
- Berechnen des Zeitintervalls t.cond.k.in, das dem Anfangssegment k.in entspricht, als:

$$t.cond.k._{in} = (T.k._{in+1} - T.curr) * Coeff.lin.k._{in} / P.f$$

- Berechnen des Zeitintervalls, das dem Endsegment k.end entspricht, als:

$$t.cond.k._{end} = (T.target - T.k._{end}) * Coeff.lin.k._{end} / P.f$$

- wenn es in mehr als zwei Segmente unterteilt wurde

- Auslesen der Extremwerte T.k.in+1, ..., T.k.end-1 aus dem Speicher, die die weitere Unterteilung des Temperaturbereichs definieren;
- für jedes Segment k Auslesen des Linearitätskoeffizienten Coeff.lin.k aus dem Speicher und Berechnen:

$$t.cond.k = (T.k+1 - T.k) * Coeff.lin.k / P.f$$

wobei t.cond.k das Teilintervall der Zeit ist, die notwendig ist, um das Fluid von einer Anfangstemperatur T.k eines Segments k auf eine Endtemperatur T.k+1 mit der prognostizierten Leistung P.f zu konditionieren;
- Berechnen der Konditionierungszeit (t.cond) als eine Summe aller Segmente t.cond.k with k =k.$_{in}$, ..., k.$_{end}$.

4. Verfahren nach dem vorhergehenden Anspruch, **dadurch gekennzeichnet, dass** die Aktivierungszeit (t.ON) für eine Wärmepumpe gemäß den folgenden Schritten geschätzt wird:

- Auslesen der Endpunkte (ΔT.1, ..., ΔT.kd, ..., ΔT.m) von aufeinanderfolgenden Segmenten aus dem Speicher, die eine Unterteilung der Differenz zwischen einer Temperatur, die für die Kondensatortemperatur (Tc) repräsentativ ist, und einer Temperatur, die für die Verdampfertemperatur (Te) repräsentativ ist, darstellen, wobei diese Extremwerte im Speicher derart voreingestellt sind, dass jedem Segment (kd) ein Linearitätskoeffizient Coeff.lin.k entspricht;
- wenn das mindestens eine Konditionierungselement eine Wärmepumpe mit variabler Geschwindigkeit (ω) ist, Korrigieren des Linearitätskoeffizienten Coeff.lin.k auf der Grundlage der Geschwindigkeit (ω);
- Erfassen eines repräsentativen Werts der Differenz zwischen einer Temperatur, die für die Kondensatortemperatur (Tc) repräsentativ ist, und einer Temperatur, die für die Verdampfertemperatur (Te) repräsentativ ist, und Erfassen der Speichertemperatur (Ta);
- Berechnen und Speichern der Segmente (k) in dem Speicher, zu denen die Speichertemperatur (Ta) gehört, wenn die Differenz in einem Segment (kd) enthalten ist,
- Zuordnen des relativen Linearitätskoeffizienten (Coeff.lin.k) zu jedem Segment (k) der Speichertemperatur (Ta).

5. Verfahren nach einem der vorhergehenden Ansprüche 1 oder 2, **dadurch gekennzeichnet, dass** die Aktivierungszeit (t.ON) auf der Grundlage einer Schätzung der Konditionierungszeit (t.cond) bestimmt wird, die auf einem Temperaturgradienten (Grad.T; Grad.T.ip) oder einem Vektor von Gradienten (Grad.T.ip) basiert, die jeweils für ein Leistungsintervall (ip) der Konditionierungsleistung gültig sind und an dem spezifischen Modell der Vorrichtung (101) erlernt wurden und von der prognostizierten Leistung (P.f) abhängig sind, wobei das Verfahren die folgenden Schritte umfasst:

- Unterteilen des Bereichs für die Konditionierungsleistung (P.cond) in (np) Intervalle und für jedes der Intervalle (ip):

  - Beginnen eines Konditionierungsschritts mit einer Konditionierungsleistung (P.cond), die gleich dem Durchschnittswert der Konditionierungsleistung (P.cond.ip) in dem Intervall (ip) ist;
  - Erlernen und Speichern des Konditionierungsgradienten Grad.T.ip in dem Speicher, der der Temperaturschwankung pro Zeiteinheit entspricht;

- bei gegebener prognostizierter Konditionierungsleistung (P.f), die in dem Intervall (ip) enthalten ist, Berechnen der entsprechenden Konditionierungszeit t.cond von der aktuellen Temperatur T.curr zur Zieltemperatur T.target mit der Formel

$$t.cond = (T.target - T.curr) / Grad.T.ip$$

- Auslesen der gewünschten Nutzungszeit (t.target) aus dem Speicher;
- Berechnen der Aktivierungszeit (t.ON) als die gewünschte Zeit (t.target) minus der Konditionierungszeit t.cond.

**6.** Verfahren nach einem der Ansprüche 3 oder 4,
**dadurch gekennzeichnet, dass**
der eine oder die mehreren Linearitätskoeffizienten (Coeff.lin; Coeff.lin.k) an dem spezifischen Modell der Vorrichtung (101) und möglicherweise an den Installationsbedingungen während der Verwendung durch die folgenden Schritte erlernt werden:

- Erlernen und Speichern eines Konditionierungsgradienten Grad.T.ip im Speicher, der einer aktuellen Konditionierungsleistung P.cond.ip und einem Temperaturbereich entspricht, der in einem Segment (k) von Temperaturen enthalten ist;
- Berechnen eines Linearitätskoeffizienten (Coeff.lin; Coeff.lin.k), der gleich dem Verhältnis des aktuellen Wertes der Konditionierungsleistung P.cond.ip zu dem Gradienten Grad.T.ip ist, mit der Formel:

$$Coeff.lin = P.cond.ip / Grad.T.ip$$

wobei Coeff.lin der Linearitätskoeffizient ist, der das Berechnen der Konditionierungszeit t.cond ermöglicht, wenn die Zieltemperatur T.target, die aktuelle Temperatur T.curr und die prognostizierte Leistung P.f bekannt sind, mit der Formel:

$$t.cond = (T.target - T.curr) * Coeff.lin / P.f.$$

**7.** Verfahren nach einem der Ansprüche 1 bis 6,
**dadurch gekennzeichnet, dass**

- die Konditionierungszeit (t.cond) geschätzt wird, nachdem die prognostizierte Leistung (P.f) nach den folgenden Schritten erlernt wurde:

  - Voreinstellen und/oder Selbstlernen einer Unterteilung des Tages in mindestens zwei Zeitintervalle für jeden Wochentag mit bekannten Verfahren, wobei für jedes Intervall (i) der Unterteilung die Anfangszeit und die Endzeit bekannt sind;

  - Erlernen der prognostizierten Leistung (P.f.i) für jedes Zeitintervall (i) nach den folgenden Schritten:

- Erfassen des Beginns eines neuen Intervalls (i);
- Berechnen und Speichern im Speicher der prognostizierten Leistung P.f.i im Intervall (i) durch Anwenden der Formel:

$$P.f.i = P.cond.i$$

- wobei P.cond.i die durchschnittliche Konditionierungsleistung während eines Zeitintervalls i ist;
- Schätzen des Teils der Konditionierungszeit (t.cond.i), der in ein Zeitintervall (i) fällt, unter Verwendung der P.f.i als die prognostizierte Leistung (P.f).

8. Verfahren nach einem der Ansprüche 2 bis 6,
   **dadurch gekennzeichnet, dass** die Konditionierungszeit (t.cond) geschätzt wird, nachdem die prognostizierte Leistung (P.f) erlernt wurde, umfassend die folgenden Schritte:

   - Voreinstellen und/oder Selbstlernen einer Unterteilung des Tages in mindestens zwei Zeitintervalle für jeden Wochentag mit bekannten Verfahren, wobei für jedes Intervall i der Unterteilung die Anfangszeit und die Endzeit bekannt sind;
   - Erlernen der prognostizierten Leistung P.f.i für jedes Zeitintervall (i) nach den folgenden Schritten:

     - Erfassen des Beginns eines neuen Intervalls (i);
     - Erhalten des Durchschnittswerts P.av.i für die verfügbare Leistung (P.av) und des Durchschnittswerts P.cond.i für die Konditionierungsleistung (P.cond), beide in dem Intervall (i), mit bekannten Verfahren;

   - Berechnen und Speichern im Speicher der prognostizierte Leistung P.f.i im Intervall (i) durch Anwenden der Formel:

$$P.f.i = minimum\ (P.cond.i + P.av.i - P.toll, P.nom);$$

   wobei P.f.i als das Minimum zwischen den Termen in Klammern berechnet wird:
   P.toll ist ein Toleranzwert, P.nom ist die Nennleistung des Heizelements;
   - Schätzen der Konditionierungszeit t.cond.i innerhalb eines Zeitintervalls (i) unter Verwendung des Wertes P.f.i als prognostizierte Leistung (P.f).

9. Verfahren nach dem vorhergehenden Anspruch,
   **dadurch gekennzeichnet, dass**
   ferner in die prognostizierte Leistung (P.f.i) für das Zeitintervall (i) eine prognostizierte Leistung aus einer erneuerbaren Quelle (P.pv.i) für denselben Zeitraum (i) einbezogen wird, indem die folgenden Schritte ausgeführt werden:

   - Erfassen der durchschnittlichen Leistung aus der erneuerbaren Quelle P.pv.i für einen beliebigen Zeitraum i und Berechnen einer prognostizierten vertraglichen Leistung P.f.contr.i, von der die durchschnittliche Leistung aus der erneuerbaren Quelle P.pv.i subtrahiert wird, durch Anwenden der Formel:

$$P.f\_contr.i = P.cond.i + P.av.i - P.pv.i - P.toll$$

   wobei P.cond.i der Durchschnittswert der Konditionierungsleistung, P.av.i die durchschnittlich verfügbare Leistung im Intervall i und P.toll ein Toleranzwert ist;
   - Empfangen einer prognostizierten Leistung aus der erneuerbaren Quelle P.f_pv.i oder Verwenden eines festen oder vorbestimmten Standardwerts basierend auf Uhrzeit und Jahreszeit;
   - Berechnen der prognostizierten Leistung P.f.i für das Zeitintervall (i) mit der Summe:

$$P.f.i = P.f\_contr.i + P.f\_pv.i$$

10. Verfahren nach einem der Ansprüche 7, 8 oder 9,
    **dadurch gekennzeichnet, dass**

die Konditionierungszeit (t.cond) bei einer durchschnittlichen prognostizierten Leistung (P.f) und einem durchschnittlichen Linearitätskoeffizienten (Coeff.lin) wie folgt geschätzt wird:

- Bestimmen einer durchschnittlichen prognostizierten Leistung P.f.m als Durchschnitt der prognostizierten Leistungen für jedes Zeitintervall i (P.f.i), möglicherweise gewichtet mit den Längen der relativen Zeitintervalle i, die zwischen der aktuellen Zeit (t.curr) und der Nutzungszeit t.target auftreten, einschließlich extremer Intervalle;
- Bestimmen eines durchschnittlichen Linearitätskoeffizienten Coeff.lin.m, wenn Linearitätskoeffizienten (Coeff.lin.k) für jedes der Temperatursegmente k bekannt sind, wobei der durchschnittliche Linearitätskoeffizient Coefflin.m als Durchschnitt der Linearitätskoeffizienten (Coeff.lin.k) berechnet werden kann, möglicherweise gewichtet mit den Längen der Temperatursegmente k, die zwischen der aktuellen Temperatur T.curr und der Zieltemperatur T.target enthalten sind;
- Berechnen der Konditionierungszeit t.cond mit der Formel:

$$t.cond = (T.target - T.curr) * Coeff.lin.m / P.f.m$$

- Berechnen der Aktivierungszeit t.ON als:

$$t.ON = t.target - t.cond.$$

11. Verfahren nach einem der Ansprüche 7, 8 oder 9,
   **dadurch gekennzeichnet, dass**
   die Aktivierungszeit t.ON zum Erreichen der Zieltemperatur T.target für die Nutzungszeit t.target) berechnet wird, indem die Temperaturschwankung wie folgt rückwärts rekonstruiert wird:

   - Schritt 1: Initialisieren der Parameter:

      - Identifizierung des Zeitintervalls i.target, in das die Nutzungszeit t.target fällt,
      - für das Zeitintervall i.target Berechnen der Anfangstemperatur $T.in_{i.target}$, die notwendig ist, um die Zieltemperatur (T.target) zu erreichen, auf der Grundlage des Linearitätskoeffizienten Coeff.lin.k, der dem Temperaturintervall k zugeordnet ist, zu dem die Zieltemperatur T.target gehört, und auf der Grundlage der prognostizierten Leistung $P.f_{i.target}$ für das Zeitintervall i.target als:

      $$T.in_{i.target} = T.target - \Delta T_{i.target} = T.target - P.f_{i.target}/$$
      $$Coeff.lin.k * (t.target - t_{i.target})$$

      wobei $t.i_{target}$ die Anfangszeit des Zeitraums i.target ist,
      - Einstellen von $T.in_{i} = T.in_{i.target}$, $t_i = t_{i.target}$ und Übergehen zu Schritt 2 zur Überprüfung;

      - Schritt 2: Prüfen, ob die Anfangstemperatur T.in.i des aktuellen Zeitraums i größer ist als die aktuelle Temperatur (T.curr) und die Anfangszeit t.i größer ist als die aktuelle Zeit (t.curr), in diesem Fall muss das Konditionieren mindestens in dem vorherigen Zeitraum beginnen, d.h.:

         - wenn T.in.i > T.curr und t.i > t.curr
         Einstellen von i = i - 1 und Übergehen zu Schritt 3, um ein Intervall i zu überspringen,
         - anderenfalls

            - wenn T.in.i > T.curr und nd t.i < t.curr Einstellen von t.ON = t.curr,
            Aktivieren des Konditionierens und Beenden des Vorgangs,
            - wenn T.in.i < T.curr
            Einstellen von i = i - 1 und Übergehen zu Schritt 4, um die Aktivierungszeit (t.ON) zu berechnen;

      - Schritt 3: Berechnen der Anfangstemperatur T.in.i des aktuellen Intervalls i mit der Formel:

$$T.in._i = T.in._{i+1} - P.f.i \, / \, Coeff.lin.k' \, * \, (t._{i+1} - t._i)$$

wobei Coeff.lin.k' vorzugsweise der Linearitätskoeffizient ist, der dem Temperatursegment entspricht, das die Temperatur $T.in._{i+1}$ enthält

- Übergehen zu Schritt 2;

- Schritt 4: Berechnen der Zeit, die notwendig ist, um von der aktuellen Temperatur T.curr zur Anfangstemperatur des nachfolgenden Intervalls T.in.i+1 zu konditionieren und Erhalten der Aktivierungszeit t.ON mit der Formel:

$$t._{i+1} - t.ON = ( \, T.in._{i+1} - T.curr \, ) \, * \, Coeff.lin \, / \, P.f.i \text{ wovon}$$

$$t.ON = t._{i+1} - ( \, T.in._{i+1} - T.curr \, ) \, * \, Coeff.lin \, / \, P.f.i.$$

**12.** Verfahren nach Anspruch 11,
**dadurch gekennzeichnet, dass**
für die Linearitätskoeffizienten (Coeff.lin.k) die spezifischen Werte, die den Temperatursegmenten k zugeordnet sind, nach den folgenden Schritten verwendet werden:

- bei einer Unterteilung der Lagertemperatur (Ta) in Segmente k, so dass jedes Segment einem Linearitätskoeffizienten (Coeff.lin.k) entspricht,
- bei einer Endtemperatur (T.i+1) und einer Anfangstemperatur (T.i), so dass (T.i) und (T.i+1) jeweils zu den Temperatursegmenten k' und k"gehören, denen die Linearitätskoeffizienten Coefflin.k' und Coeff. lin.k" jeweils entsprechen, Berechnen eines durchschnittlichen Linearitätskoeffizienten als gewichteter Durchschnitt zwischen:

- Coefflin.k' und Coefflin.k", mit den Gewichtungen jeweils proportional zur Überlappung zwischen dem Temperatursegment [Ti, T.i+1] und den Segmenten k' und k" und
- wobei alle Linearitätskoeffizienten Coefflin.k allen Zwischensegmenten zwischen k' und k" entsprechen, mit einer Gewichtung von gleich 1.

**13.** Verfahren nach einem der Ansprüche 10,11 oder 12,
**dadurch gekennzeichnet, dass**

- erfasst wird, ob während der Berechnung der Aktivierungszeit (t.ON) überprüft wird, dass T.in.i > T.curr und t.i < t.curr, wobei T.in.i die Anfangstemperatur im Intervall i und t.i die Anfangszeit des Intervalls i ist, und T.in.i und t.i einen Punkt in einer schrittweisen linearen Temperaturkurve darstellen, die es ermöglicht, die Zieltemperatur durch die Nutzungszeit oder nach einer neuen Berechnung zu erreichen, wobei die Aktivierungszeit (t.ON) vor der aktuellen Zeit liegt;

- wenn ja, wird signalisiert, dass die verbleibende Zeit für die Nutzungszeit (t.target) kürzer ist als die geschätzte Konditionierungszeit (t.cond).

**14.** Verfahren nach einem der Ansprüche 2 bis 13,
**dadurch gekennzeichnet, dass** es die folgenden Schritte aufweist:

- Erfassen, ob die Differenz zwischen der Leistung der erneuerbaren Quelle (P.pv) und der verbrauchten Leistung (P.used), die der überschüssigen Leistung (P.sur) gleich ist, größer als Null ist;
- wenn ja:

- Einstellen der Endtemperatur der Konditionierung (T.end.cond) gleich einer vordefinierten Höchsttemperatur (T.lim), die in der Steuerkarte (2) eingestellt ist, und höher oder gleich der Zieltemperatur (T.target) im Falle des Heizens und niedriger oder gleich im Falle des Kühlens;
- wenn eine der folgenden Bedingungen eintritt: (a) die Zieltemperatur (T.target) ist erreicht oder (b) es gibt keinen aktiven Konditionierungsschritt, aber es fehlt weniger als eine eventuell einstellbare Zeit für die Aktivierung,
- Beginnen oder Fortsetzen eines Konditionierungsschritts durch Ausführen einer Anpassung der Konditionierungsleistung P.cond, so dass die überschüssige Leistung P.sur nicht negativ ist, wobei eine Variation ΔP.cond in der Konditionierungsleistung wie folgt auferlegt wird:

$$\Delta P.cond <= minimum\ (P.sur,\ P.nom - P.cond)$$

- wenn die Endtemperatur der Konditionierung (T.end.cond) erreicht ist, Beenden des Konditionierungsschritts.

15. Vorrichtung (101) zum Konditionieren der Temperatur eines Fluids in einem Speicher, der zur Installation in einer Anlage geeignet ist, wobei die Vorrichtung (101) umfasst:

- den Speicher, ein Konditionierungselement, das mit elektrischer Energie betrieben wird, und eine Steuerkarte (2), wobei die Steuerkarte umfasst:

- Mittel zum Erfassen eines Mehrverbrauchs auf der Grundlage von Signalen von einem Kommunikationskanal (401; 402; 404);
- Mittel zum Modulieren einer Konditionierungsleistung (P.cond) des Konditionierungselements;
- Speichermittel zum Speichern von Parametern, die die Zieltemperatur (T.target) und die Nutzungszeit (t.target) umfassen, und zum Durchführen von Berechnungen zu diesen Parametern;
- Mittel zum Erfassen von einer Temperatur "Ta" in dem Speicher;
und ferner konfiguriert ist, um
- eine Aktivierungszeit (t.ON) derart zu bestimmen, dass das Fluid die Zieltemperatur (T.target) innerhalb der Nutzungszeit (t.target) erreicht und die Konditionierungsleistung (P.cond) eine prognostizierte Leistung (P.f) ist, die kleiner oder gleich der Nennleistung (P.nom) des Konditionierungselements ist;
- die Konditionierungsleistung (P.cond) zu reduzieren, bis die verbrauchte Leistung (P.used), die zu der Toleranz (P.toll) addiert wird, die lieferbare Leistung (P.em) innerhalb des begrenzten Zeitintervalls (Δt.max) ab dem Zeitpunkt des Mehrverbrauchs (t.sovr), das im Speicher der Steuerkarte (2) definiert ist, nicht mehr überschreitet und solange die Konditionierungsleistung (P.cond) größer als Null bleibt;
- und das Verfahren nach einem der Ansprüche 1 bis 14 anzuwenden.

**Revendications**

1. Méthode de conditionnement d'un fluide à une température cible (T.target) dans un temps d'utilisation souhaité (t.target), au moyen d'un dispositif (101) qui contrôle un élément de conditionnement adapté pour conditionner un fluide dans un stockage où ledit dispositif est alimenté par l'énergie électrique, et fait partie d'une installation d'utilisateur électrique dans laquelle il partage la puissance délivrable (P.em) avec d'autres charges électriques,

- où ladite puissance délivrable (P.em) est définie comme la somme de la puissance contractuelle (P.contr) qui est la puissance maximale délivrable par le réseau et, le cas échéant, de la puissance provenant d'une source renouvelable (P.pv),
- et où, dans cette installation d'utilisateur, il existe une restriction selon laquelle la puissance totale utilisée (P.used) par ces charges ne dépasse pas la puissance délivrable (P.em) pendant plus d'un intervalle de temps limité (Δt.max),
- et ledit dispositif d'utilisation est équipé de moyens capables de détecter au moins si ladite puissance utilisée (P.used) est supérieure à ladite puissance délivrable (P.em),
- et ledit dispositif (101) est équipé d'une carte de contrôle (2) adaptée au moins pour :

- détecter la température de stockage (Ta) dans ledit stockage,
- garder en mémoire des paramètres comprenant ladite température cible (T.target) et ladite durée d'utilisation (t.target) et effectuer des calculs sur ces paramètres,
- moduler une puissance de conditionnement (P.cond) dudit élément de conditionnement ;

la méthode est **caractérisée par** les étapes suivantes :

- déterminer un temps d'activation (t.ON) tel que ledit fluide atteigne ladite température cible (T.target) dans ledit temps d'utilisation (t.target) et que ladite puissance de conditionnement (P.cond) soit une puissance prévisionnelle (P.f) inférieure ou égale à la puissance nominale (P.nom) dudit élément de conditionnement

- au moment de l'activation (t.ON), démarrer une étape de conditionnement et régler la température de fin de conditionnement (T.end.cond) sur la température de consigne (T.target) ;
- au cours de cette étape de conditionnement, effectuer périodiquement les contrôles suivants :

- si ladite puissance utilisée (P.used) plus une valeur de tolérance (P.toll) non inférieure à zéro dépasse ladite puissance délivrable (P.em), alors
- détecter le moment de surconsommation (t.sovr) auquel cela se produit et
- réduire ladite puissance de conditionnement (P.cond) jusqu'à ce que ladite puissance utilisée (P.used) ajoutée à ladite tolérance (P.toll) ne dépasse plus ladite puissance délivrable (P.em), dans ledit intervalle de temps limité (Δt.max) à partir dudit temps de surconsommation (t.sovr), défini dans la mémoire de ladite carte de contrôle (2) et tant que ladite puissance de conditionnement (P.cond) reste supérieure à zéro ;
- si ladite température de fin de conditionnement (T.end.cond) est atteinte, terminer ladite étape de conditionnement.

2. Méthode selon la revendication 1,
**caractérisée par** le fait de
détecter une puissance disponible (P.av) définie par la différence entre la puissance délivrable (P.em) et la puissance utilisée (P.used) et ajuster ladite puissance de conditionnement (P.cond) comme suit :

- pendant ladite étape de conditionnement, détecter ladite puissance disponible (P.av) donnée par la différence entre ladite puissance délivrable (P.em) et ladite puissance utilisée (P.used) ;
- si ladite puissance disponible P.av est inférieure à ladite tolérance P.toll :

- détecter ledit moment de surconsommation (t.sovr) au cours duquel cela se produit et avant que ledit temps limité (Δt.max) ne se soit écoulé à partir dudit moment de surconsommation (t.sovr), réduire ladite puissance de conditionnement (P.cond) d'une quantité ΔP.cond au moins égale à ladite puissance disponible (P.av) moins ladite tolérance (P.toll) et dans tous les cas au plus égale à ladite puissance de conditionnement (P.cond), réduction pouvant être obtenue avec un arrêt complet ; en formules :

$$\Delta P.cond <= P.av - P.toll,$$

où une variation négative de la puissance de conditionnement ΔP.cond indique une réduction et où la réduction maximale est égale à ladite puissance de conditionnement (P.cond) et où ladite tolérance (P.toll) est supérieure ou égale à zéro ;

- alternativement, régler ladite puissance de conditionnement (P.cond) à la valeur maximale telle que ladite puissance disponible P.av, moins ladite valeur de tolérance possible P.toll, ne soit pas négative, en fixant une variation ΔP.cond pour ladite puissance de conditionnement comme suit :

$$\Delta P.cond = P.av - P.toll$$

et où la réduction maximale est égale à ladite puissance de conditionnement (P.cond) et l'augmentation maximale est égale à la différence entre ladite puissance nominale de conditionnement (P.nom) et ladite puissance de conditionnement (P.cond) et où ladite valeur de tolérance (P.toll) est supérieure ou égale à zéro.

3. Méthode selon l'une quelconque des revendications précédentes, où le temps d'activation (t.ON) est calculé comme le temps d'utilisation (t.target), gardé en mémoire, moins un temps de conditionnement (t.cond), qui est estimé en fonction de la différence entre la température de consigne T.target et la température actuelle T.curr, avec une courbe linéaire par morceaux pour au moins un segment avec un gradient égal au rapport d'un coefficient de linéarité (Coefflin ; Coeff.lin.k) à une puissance prévisionnelle P.f (P.f.i), inférieure ou égale à ladite puissance nominale (P.nom), où ledit coefficient de linéarité Coeff.lin ; Coeff.lin.k est égal au rapport de la capacité thermique Cap.ter au rendement de conditionnement (eff ; eff.k),

$$\mathrm{Coeff.lin.k = Cap.ter/eff.k}$$

et où eff.k est l'efficacité du processus de conditionnement dans un intervalle k de température de stockage (Ta), et Coeff.lin.k est le coefficient de linéarité. Ledit coefficient de linéarité Coeff.lin ; Coeff.lin.k est connu et indépendant de ladite puissance prévisionnelle (P.f) ; la méthode comprenant les étapes suivantes :

- si la courbe linéaire par morceaux ne comporte qu'un seul segment (k), un seul coefficient de linéarité est défini,

- en lisant dans la mémoire le coefficient de linéarité Coeff.lin.k, disponible soit parce qu'il est préréglé en usine, soit parce qu'il est estimé, pour lequel la formule suivante est valable :

$$\mathrm{t.cond = (T.target - T.curr) * Coeff.lin.k / P.f}$$

où t.cond est une estimation du temps de conditionnement, T.curr est la température actuelle ;

- sinon, si la courbe linéaire par morceaux a au moins deux segments de température (k) avec des coefficients de linéarité différents Coeff.lin.k, en estimant ledit temps de conditionnement t.cond comme la somme du temps de conditionnement pour chaque segment de température (k) avec la méthode suivante :

- identifier parmi ceux en mémoire le segment initial k.in et le segment final k.end auxquels appartiennent respectivement ladite température courante (T.curr) et ladite température cible (T.target) ;
- si ces segments coïncident, en revenant au cas précédent d'un seul coefficient de linéarité, dans le cas contraire :
- lire dans la mémoire les deux coefficients de linéarité Coeff.lin.k.in et Coeff.lin.k.end relatifs audit segment initial k.in et final k.end ;
- lire dans la mémoire la température finale $T.k_{.in+1}$ du segment initial k.in du conditionnement, qui est le segment comprenant la température actuelle T.curr et la température initiale T.k.end du segment final k.end à la fin du conditionnement qui comprend la température de consigne T.target (dans le cas de deux segments, ces valeurs coïncident)
- calculer l'intervalle de temps t.cond.k.in correspondant audit segment initial k.in comme suit :

$$\mathrm{t.cond.k_{.in} = (T.k_{.in+1} - T.curr) * Coeff.lin.k_{.in} / P.f}$$

- calculer l'intervalle de temps correspondant audit segment final k.end comme suit :

$$\mathrm{t.cond.k_{.end} = (T.target - T.k_{.end}) * Coeff.lin.k_{.end} / P.f}$$

- s'il a été divisé en plus de deux segments

- lire dans la mémoire les extrêmes T.k.in+1, ..., T.k.end-1 qui définissent la subdivision suivante de ladite plage de température ;
- pour chacun des segments k, lire dans la mémoire le coefficient de linéarité Coeff.lin.k et le calculer :

$$\mathrm{t.cond.k = (T.k+1 - T.k) * Coeff.lin.k / P.f}$$

dans lequel t.cond.k est le sous-intervalle de temps nécessaire pour conditionner le fluide d'une température initiale T.k d'un segment k à une température finale T.k+1 avec ladite puissance prévisionnelle P.f ;
- calculer le temps de conditionnement (t.cond) en tant que somme de tous les segments t.cond.k avec k $=k_{.in}, ..., k_{.end}$.

4. Méthode selon la revendication précédente, **caractérisée par** le fait d'estimer ledit temps d'activation (t.ON) pour une pompe à chaleur selon les étapes suivantes :

- en lisant dans la mémoire les points extrêmes ($\Delta$T.1, ..., $\Delta$T.kd, ..., $\Delta$T.m) des segments consécutifs qui constituent une subdivision de la différence entre une température représentative de la température du condenseur (Tc) et une température représentative de la température de l'évaporateur (Te), ces points extrêmes étant prédéfinis dans la mémoire de façon à ce qu'à chaque segment (kd) corresponde un coefficient de linéarité Coeff.lin.k ;
- si ledit au moins un élément de conditionnement est une pompe à chaleur à vitesse variable ($\omega$), corriger ledit coefficient de linéarité Coeff.lin.k sur la base de ladite vitesse ($\omega$) ;
- détection d'une valeur représentative de ladite différence entre une température représentative de la température du condenseur (Tc) et une température représentative de la température de l'évaporateur (Te), et détection de ladite température de stockage (Ta) ;
- calculer et enregistrer en mémoire les segments (k) auxquels appartient la température de stockage (Ta) lorsque la différence est comprise dans un segment (kd),
- à chaque segment (k), de ladite température de stockage (Ta) associant le coefficient de linéarité relative (Coeff.lin.k).

**5.** Méthode selon l'une quelconque des revendications précédentes 1 ou 2, **caractérisée par** le fait de déterminer ledit temps d'activation (t.ON) sur la base d'une estimation dudit temps de conditionnement (t.cond) basée sur un gradient de température (Grad.T ; Grad.T.ip) ou un vecteur de gradients (Grad.T.ip) valables chacun pour un intervalle de puissance (ip) de la puissance de conditionnement et appris sur le modèle spécifique dudit dispositif (101) et dépendant de ladite puissance prévisionnelle (P.f), le procédé comprenant les étapes suivantes :

- subdiviser la plage de ladite puissance de conditionnement (P.cond) en (np) intervalles et pour chacun de ces intervalles (ip) :

- démarrer une étape de conditionnement avec ladite puissance de conditionnement (P.cond) égale à la valeur moyenne de la puissance de conditionnement (P.cond.ip) dans ledit intervalle (ip) ;
- l'apprentissage et la mise en mémoire du gradient de conditionnement Grad.T.ip, égal à la variation de température par unité de temps ;

- étant donné ladite puissance de conditionnement prévisionnelle (P.f) comprise dans ledit intervalle (ip), calculer ledit temps de conditionnement t.cond correspondant de la température actuelle T.curr à ladite température cible T.target avec la formule suivante

$$t.cond = (T.target - T.curr) / Grad.T.ip$$

- lecture dans la mémoire de la durée d'utilisation souhaitée (t.target) ;
- calculer ledit temps d'activation (t.ON) comme ledit temps souhaité (t.target) moins ledit temps de conditionnement t.cond.

**6.** Méthode selon l'une quelconque des revendications 3 ou 4, **caractérisée par le fait que** l'apprentissage de ce ou ces coefficients de linéarité (Coeff.lin ; Coeff.lin.k) sur le modèle spécifique de ce dispositif (101) et éventuellement sur les conditions d'installation, pendant l'utilisation, à travers les étapes suivantes :

- l'apprentissage et la sauvegarde en mémoire d'un gradient de conditionnement Grad.T.ip correspondant à une puissance de conditionnement actuelle P.cond.ip et à une plage de température comprise dans un segment (k) de températures ;
- calculer un coefficient de linéarité (Coeff.lin ; Coeff.lin.k), égal au rapport de ladite valeur courante de la puissance de conditionnement P.cond.ip sur ledit gradient Grad.T.ip avec la formule :

$$Coeff.lin = P.cond.ip/Grad.T.ip$$

où Coeff.lin est le coefficient de linéarité qui permet de calculer le temps de conditionnement t.cond, connaissant la température de consigne T.target, la température actuelle T.curr et la puissance prévisionnelle P.f avec la formule :

$$t.cond = (T.target - T.curr) * Coeff.lin / P.f.$$

7. Méthode selon l'une quelconque des revendications de 1 à 6, **caractérisée par** le fait de

- estimer ledit temps de conditionnement (t.cond) après avoir appris ladite puissance prévisionnelle (P.f) selon les étapes suivantes :

- la division de la journée en au moins deux intervalles de temps, pour chaque jour de la semaine, a été prédéfinie et/ou auto-apprise par des méthodes connues, l'heure de début et l'heure de fin étant connues pour chaque intervalle (i) de la division ;
- l'apprentissage de la puissance prévisionnelle (P.f.i) pour chaque intervalle de temps (i) selon les étapes suivantes :

- détection du début d'un nouvel intervalle (i) ;
- calculer et enregistrer en mémoire la puissance prévisionnelle P.f.i dans l'intervalle (i) en appliquant la formule :

$$P.f.i = P.cond.i$$

- où P.cond.i est la moyenne de la puissance de conditionnement pendant un intervalle de temps i ;
- estimer ladite partie du temps de conditionnement (t.cond.i) tombant dans un intervalle (i) de temps en utilisant ladite P.f.i comme puissance prévisionnelle (P.f).

8. Méthode selon l'une quelconque des revendications de 2 à 6, **caractérisée par** le fait de estimer ledit temps de conditionnement (t.cond) après avoir appris ladite puissance prévisionnelle (P.f) selon les étapes suivantes :

- la division de la journée en au moins deux intervalles de temps, pour chaque jour de la semaine, a été prédéfinie et/ou auto-apprise par des méthodes connues, l'heure de début et l'heure de fin étant connues pour chaque intervalle i de la division ;
- pour chaque intervalle de temps (i), apprentissage de la puissance prévisionnelle P.f.i selon les étapes suivantes :

- détection du début d'un nouvel intervalle (i) ;
- obtenir la valeur moyenne P.av.i pour ladite puissance disponible (P.av) et la valeur moyenne P.cond.i pour ladite puissance de conditionnement (P.cond), toutes deux dans ledit intervalle (i), à l'aide de méthodes connues ;
- calculer et enregistrer en mémoire ladite puissance prévisionnelle P.f.i dans l'intervalle (i) en appliquant la formule :

$$P.f.i = minimum (P.cond.i + P.av.i - P.toll, P.nom) ;$$

où P.f.i est calculé comme le minimum entre les termes entre parenthèses :
P.toll est une valeur de tolérance, P.nom est la puissance nominale de l'élément chauffant ;
- en estimant ledit temps de conditionnement t.cond.i dans un intervalle de temps (i) en utilisant ladite valeur P.f.i comme puissance prévisionnelle (P.f).

9. Méthode selon la revendication précédente,
**caractérisée par** le fait de
inclure en outre, dans ladite puissance prévisionnelle (P.f.i) pour ledit intervalle de temps (i), une puissance prévisionnelle provenant d'une source renouvelable (P.pv.i) pour la même période (i) en effectuant les étapes suivantes :

- détecter la puissance moyenne de la source renouvelable P.pv.i pour toute période i et calculer une puissance contractuelle prévisionnelle P.f.contr.i, à laquelle est soustraite ladite puissance moyenne de la source renouvelable P.pv.i, en appliquant la formule :

$$P.f\_contr.i = P.cond.i + P.av.i - P.pv.i - P.toll$$

où P.cond.i est la valeur moyenne de la puissance de conditionnement, P.av.i est la puissance moyenne disponible dans l'intervalle i et P.toll est une valeur de tolérance ;
- en recevant une puissance prévisionnelle de la source renouvelable P.f_pv.i ou en utilisant une valeur par défaut fixe ou prédéterminée en fonction de l'heure et de la saison ;
- calculer ladite puissance prévisionnelle P.f.i pour ledit intervalle de temps (i) avec la somme :

$$P.f.i = P.f\_contr.i + P.f\_pv.i$$

10. Méthode selon l'une quelconque des revendications 7, 8 ou 9
**caractérisée par** le fait de
l'estimation du temps de conditionnement (t.cond) en fonction d'une puissance moyenne prévisionnelle (P.f) et d'un coefficient moyen de linéarité (Coeff.lin), comme suit :

- déterminer une puissance prévisionnelle moyenne P.f.m comme la moyenne des puissances prévisionnelles pour chaque intervalle de temps i (P.f.i) éventuellement pondérée par les longueurs des intervalles de temps relatifs i se produisant entre l'heure actuelle (t.curr) et l'heure d'utilisation t.target, les intervalles extrêmes étant inclus ;
- déterminer un coefficient de linéarité moyen Coefflin.m, si les coefficients de linéarité (Coeff.lin.k) sont connus pour chacun desdits segments de température k, ledit coefficient de linéarité moyen Coeff.lin.m peut être calculé comme une moyenne des coefficients de linéarité (Coeff.lin.k) éventuellement pondérée par les longueurs des segments de température k compris entre la température courante T.curr et la température cible T.target ;
- calculer le temps de conditionnement t.cond avec la formule :

$$t.cond = (T.target - T.curr) * Coeff.lin.m / P.f.m$$

- en calculant ledit temps d'activation t.ON comme suit :

$$t.ON = t.target - t.cond.$$

11. Méthode selon l'une quelconque des revendications 7, 8 ou 9
**caractérisée par** le fait de
calculer ledit temps d'activation t.ON pour atteindre ladite température cible T.target pour ledit temps d'utilisation t.target) en reconstruisant l'excursion de température à rebours comme suit :

- étape 1 : initialisation des paramètres :

- identifier l'intervalle de temps i.target dans lequel se situe le temps d'utilisation t.target,
- pour ledit intervalle de temps i.target calculer la température initiale $T.in._{i.target}$ nécessaire pour atteindre ladite température cible (T.target) sur la base dudit coefficient de linéarité Coeff.lin.k, associé à l'intervalle de température k auquel appartient ladite température cible T.target et sur la base de ladite puissance prévisionnelle $P.f._{i.target}$ pour ledit intervalle de temps i.target comme suit :

$$T.in._{i.target} = T.target - \Delta T._{i.target} = T.target - P.f._{i.target} /$$

$$Coeff.lin.k * (t.target - t._{i.target})$$

où $t.i._{target}$ est l'heure de début de la période i.target,
- en définissant $T.in._i = T.in._{i.target}$, $t._i = t._{i.target}$ et en passant à l'étape 2 pour la vérification ;

- étape 2 : vérifier si la température initiale $T.in._i$ de la période actuelle i est supérieure à la température actuelle (T.curr) et si le temps initial t.i est supérieur au temps actuel (t.curr) ; dans ce cas, le conditionnement doit commencer au moins au cours de la période précédente, c'est-à-dire :

- si T.in.i > T.curr et t.i > t.curr
en définissant i = i - 1 et en passant à l'étape 3 pour sauter un intervalle i,
- autrement

- si T.in.i > T.curr, et t.i < t.curr, en définissant t.ON = t.curr, en activant le conditionnement et la fin de la procédure,
- si T.in.i < T.curr

en définissant i = i- 1 et en passant à l'étape 4 pour calculer ledit temps d'activation (t.ON) ;

- étape 3 : calcul de la température initiale T.in.i de l'intervalle courant i à l'aide de la formule :

$$T.in._{i} = T.in._{i+1} - P.f.i / Coeff.lin.k' * (t._{i+1} - t._{i})$$

où Coeff.lin.k' est de préférence le coefficient de linéarité correspondant au segment de température contenant la température $T.in._{i+1}$

- passer à l'étape 2 ;

- étape 4 : calcul du temps nécessaire pour passer de la température actuelle T.curr à la température initiale de l'intervalle suivant T.in.i+1 et obtention du temps d'activation t.ON à l'aide de la formule :

$$t._{i+1} - t.ON = ( T.in._{i+1} - T.curr ) * Coeff.lin / P.f.i \text{ d'où}$$

d'où

$$t.ON = t._{i+1} - ( T.in._{i+1} - T.curr ) * Coeff.lin / P.f.i.$$

**12.** Méthode selon la revendication 11
**caractérisée par** le fait de
utiliser pour lesdits coefficients de linéarité (Coeff.lin.k) les valeurs spécifiques associées aux segments de température k selon les étapes suivantes :

- étant donné une subdivision de la température de stockage (Ta) en segments k tels que chacun corresponde à un coefficient de linéarité (Coeff.lin.k),
- étant donné une température finale (T.i+1) et une température initiale (T.i) telles que (T.i) et (T.i+1) appartiennent respectivement aux segments de température k' et k" auxquels correspondent respectivement les coefficients de linéarité Coeff.lin.k' et Coeff.lin.k", calculer un coefficient de linéarité moyen en tant que moyenne pondérée entre les coefficients de linéarité Coeff.lin.k' et Coeff.lin.k" :
- Coeff.lin.k' et Coefflin.k", dont les poids sont respectivement proportionnels au chevauchement entre le segment de température [Ti, T.i+1] et les segments k' et k" et
- tout coefficient de linéarité Coeff.lin.k correspondant à tout segment intermédiaire entre k' et k" avec un poids égal à 1.

**13.** Méthode selon l'une des revendications 10, 11 ou 12 **caractérisée par** le fait de

- détecter si, lors du calcul dudit temps d'activation (t.ON), il est vérifié que T.in.i > T.curr, et t.i < t.curr
où T.in.i est la température initiale dans l'intervalle i, et t.i est le temps initial de l'intervalle i, et T.in.i et t.i représentent un point dans une courbe de température linéaire progressive qui permet d'atteindre la température cible par le temps d'utilisation ou à la suite d'un nouveau calcul, le temps d'activation (t.ON) étant antérieur au temps actuel ;

- dans l'affirmative, signaler que le temps restant pour ladite durée d'utilisation (t.target) est inférieur à la durée de conditionnement estimée (t.cond).

14. Méthode selon l'une quelconque des revendications de 2 à 13 **caractérisée par le fait qu'**elle comprend les étapes suivantes :

- détecter si la différence entre ladite puissance de source renouvelable (P.pv) et ladite puissance utilisée (P.used), égale à la puissance excédentaire (P.sur), est supérieure à zéro ;
- dans l'affirmative :

  - en réglant ladite température de fin de conditionnement (T.end.cond) égale à une température maximale prédéfinie (T.lim) fixée dans ladite carte de contrôle (2) et supérieure ou égale à ladite température de consigne (T.target) en cas de chauffage et inférieure ou égale en cas de refroidissement ;
  - si l'une des conditions est remplie : (a) ladite température cible (T.target) est atteinte ou (b) il n'y a pas d'étape de conditionnement active, mais il manque moins d'un temps éventuellement réglable pour l'activation,
  - démarrer ou poursuivre une étape de conditionnement en effectuant un ajustement de ladite puissance de conditionnement P.cond de telle sorte que ladite puissance excédentaire P.sur soit non négative, en imposant une variation $\Delta$P.cond de la puissance de conditionnement comme suit :

$$\Delta P.cond <= minimum\ (P.sur,\ P.nom\ -\ P.cond)$$

  - si ladite température de fin de conditionnement (T.end.cond) est atteinte, terminer ladite étape de conditionnement.

15. Dispositif (101) de conditionnement de la température d'un fluide dans un stockage adapté à une installation, le dispositif (101) comprenant :

- la mémoire, un élément de conditionnement alimenté par l'énergie électrique, et une carte de contrôle (2), la carte de contrôle comprenant :
- des moyens pour détecter une situation de surconsommation sur la base de signaux provenant d'un canal de communication (401 ; 402 ; 404) ;
- des moyens pour moduler une puissance de conditionnement (P.cond) dudit élément de conditionnement ;
- des moyens de mémoire pour stocker des paramètres comprenant ladite température cible (T.target) et ladite durée d'utilisation (t.target) et effectuer des calculs sur ces paramètres ;
- des moyens pour détecter une température « Ta » dans le stockage ;
et configuré en outre pour
- déterminer un temps d'activation (t.ON) tel que ledit fluide atteigne ladite température cible (T.target) dans ledit temps d'utilisation (t.target) et que ladite puissance de conditionnement (P.cond) soit une puissance prévisionnelle (P.f) inférieure ou égale à la puissance nominale (P.nom) dudit élément de conditionnement ;
- réduire ladite puissance de conditionnement (P.cond) jusqu'à ce que ladite puissance utilisée (P.used) ajoutée à ladite tolérance (P.toll) ne dépasse plus ladite puissance délivrable (P.em), dans ledit intervalle de temps limité ($\Delta$t.max) à partir dudit temps de surconsommation (t.sovr), défini dans la mémoire de ladite carte de contrôle (2) et tant que ladite puissance de conditionnement (P.cond) reste supérieure à zéro ;
- Et appliquer la méthode selon l'une quelconque des revendications de 1 à 14.

Fig. 1.a

Fig. 1.b

**Fig. 1.c**

**Fig. 2**

**Fig. 3**

EP 4 278 420 B1

Fig. 4

## REFERENCES CITED IN THE DESCRIPTION

**Patent documents cited in the description**

- WO 0101542 A1
- JP 5853747 B
- EP 2830184 A1
- US 2016274556 A1
- EP 3508800 A1

- EP 3382297 A1
- JP 2008267708 B
- US 2026216007 A1
- WO 2019025850 A